# EUROPEAN PATENT SPECIFICATION

(11) **EP 3 619 565 B1**
(45) Date of publication and mention of the grant of the patent: **26.04.2023**
(21) Application number: 18722040.5
(22) Date of filing: 03.05.2018
(51) Int. Cl.: G02B 6/44, G02B 6/38

(54) **TELECOMMUNICATIONS ENCLOSURE WITH MODULAR FEATURES**
TELEKOMMUNIKATIONSGEHÄUSE MIT MODULAREN MERKMALEN
ENCEINTE DE TÉLÉCOMMUNICATIONS À CARACTÉRISTIQUES MODULAIRES

(30) Priority: 05.05.2017 US 201762502210 P; 05.05.2017 US 201762502144 P; 05.05.2017 US 201762502227 P
(43) Date of publication of application: 11.03.2020
(73) Proprietor: CommScope Connectivity Belgium BVBA, 3010 Kessel-Lo (BE)
(72) Inventor: VAN BAELEN, David Jan Irma, Hickory, North Carolina 28602 (US); SCHURMANS, Eric, Hickory, North Carolina 28602 (US); ALLEN, Barry Wayne, Hickory, North Carolina 28602 (US)
(74) Representative: Murgitroyd & Company
(86) International application number: PCT/EP2018/061422
(87) International publication number: WO 2018/202812

(56) References cited:
- EP-A1- 2 439 570
- EP-A1- 2 680 055
- WO-A1-2015/189384
- WO-A1-2016/005291
- US-A1- 2004 156 611
- US-A1- 2005 100 301
- US-A1- 2014 376 870
- US-A1- 2016 161 694

## Description

### CROSS-REFERENCE TO RELATED APPLICATIONS

This application claims the benefit of U.S. Patent Application Serial No. 62/502,210, filed on May 5, 2017, and claims the benefit of U.S. Patent Application Serial No. 62/502,144, filed on May 5, 2017, and claims the benefit of U.S. Patent Application Serial No. 62/502,227, filed on May 5, 2017.

### BACKGROUND

As demand for telecommunications increases, networks are being extended in more and more areas. In facilities such as single-family homes, multiple dwelling units (MDU's), apartments, condominiums, businesses, etc., enclosures and cabinets are used to provide subscriber access points to a telecommunications network. Cables are also used to interconnect the subscriber access points provided by enclosures and cabinets with subscribers at subscriber locations (e.g., at each residence). The enclosures and cabinets used can have various forms depending on such factors as the environment, the space requirements for containing telecommunications equipment, the density requirements, and the type of technician access needed for the telecommunications equipment. Further, the enclosures and cabinets can be designed to be reconfigured over time as the need for different telecommunications equipment changes over time (e.g. network expansion).

Further development in such fiber termination systems is desired.

### SUMMARY

An embodiment of a telecommunications enclosure is defined in claim 1. Preferred variants of this telecommunications enclosure are defined in the dependent claims 2-14.

### DRAWINGS

FIG. 1 is a perspective view of a telecommunications enclosure configured to house one or more tray assemblies.
FIG. 2 is a perspective view of the telecommunications enclosure of FIG. 1 with the cover in an open position to show two tray assemblies, each including a base, modular tower, and a plurality of hinged trays in accordance with the present disclosure.
FIG. 3 is a perspective view of the telecommunications enclosure of FIG. 1 with the cover removed to show a tray assembly and a termination assembly in accordance with the present disclosure.
FIG. 4 is a perspective view of the telecommunications enclosure of FIG. 1 with the cover removed to show a tray assembly and a cable management system in accordance with the present disclosure.
FIG. 5 is a front elevational view of the telecommunications enclosure of FIG. 4.
FIG. 6 is a perspective view of the telecommunications enclosure of FIG. 1 with the cover removed to show a termination assembly and a cable management system in accordance with the present disclosure.
FIG. 7 is a front view of an alternative enclosure within which the tray assemblies of the disclosure can be installed.
FIG. 8 is a cross-sectional side view of the enclosure shown in Figure 38 housing a tray assembly in accordance with the disclosure.
FIG. 9 is a perspective view of a first example of a tray assembly suitable for use in any of the enclosures of FIGS. 1-8, the tray assembly including a base, a modular tower, and a plurality of hinged trays.
FIG. 10 is a side view of the modular tower and connected hinged trays of the tray assembly shown in FIG. 9.
FIG. 11 is a perspective view of the base of the tray assembly shown in FIG. 9.
FIG. 12 is a side view of the base of the tray assembly shown in FIG. 9.
FIG. 13 is a top view of the base of the tray assembly shown in FIG. 9.
FIG. 14 is a rear view of the base of the tray assembly shown in FIG. 9.
FIG. 15 is a top view of a tower module of the base of the tray assembly shown in FIG. 9.
FIG. 16 is a bottom view of the tower module shown in FIG. 15.
FIG. 17 is a side view of the tower module shown in FIG. 15.
FIG. 18 is a rear view of the tower module shown in FIG. 15.
FIG. 19 is a rear perspective view of two of the tower modules shown in FIG. 15 being interconnected together.
FIG. 20 is a front perspective view of the interconnected tower modules shown in FIG. 19.
FIG. 21 is a top front perspective view of an alternative base usable with the tray assembly shown in FIG. 9.
FIG. 22 is a top rear perspective view of an alternative base usable with the tray assembly shown in FIG. 9.
FIG. 23 is a perspective view of a second example of a tray assembly suitable for use in any of the enclosures of FIGS. 1-8, the tray assembly including a base, a modular tower, and a plurality of hinged trays.
FIG. 24 is a perspective view of the modular tower and connected hinged trays of the tray assembly shown in FIG. 23.
FIG. 25 is a side view of a single module of the modular tower and connected hinged trays of the tray assembly shown in FIG. 23.
FIG. 26 is a perspective view of the base of the tray assembly shown in FIG. 23.
FIG. 27 is a top view of a tower module of the base of the tray assembly shown in FIG. 23.
FIG. 28 is a bottom view of the tower module shown in FIG. 27.
FIG. 29 is a side view of the tower module shown in FIG. 27.
FIG. 30 is a rear view of the tower module shown in FIG. 27.
FIG. 31 is a rear perspective view of two of the tower modules shown in FIG. 27 being interconnected together.
FIG. 32 is a front perspective view of the interconnected tower modules shown in FIG. 31.
FIG. 33 is a perspective view of a third example of a tray assembly suitable for use in any of the enclosures of FIGS. 1-8, the tray assembly including a base, a modular tower, and a plurality of hinged trays.
FIG. 34 is a perspective view of the modular tower and connected hinged trays of the tray assembly shown in FIG. 33.
FIG. 35 is a perspective view of the base of the tray assembly shown in FIG. 33.
FIG. 36 is a front view of the base of the tray assembly shown in FIG. 33.
FIG. 37 is a rear view of the base of the tray assembly shown in FIG. 33.
FIG. 38 is a top view of a tower module of the base of the tray assembly shown in FIG. 33.
FIG. 39 is a bottom view of the tower module shown in FIG. 38.
FIG. 40 is a side view of the tower module shown in FIG. 38.
FIG. 41 is a rear view of the tower module shown in FIG. 38.
FIG. 42 is a rear perspective view of two of the tower modules shown in FIG. 38 being interconnected together.
FIG. 43 is a front perspective view of the interconnected tower modules shown in FIG. 42.
FIG. 44 is a top perspective view of an example patch panel arrangement including termination arrangements pivotally mounted to a base, the termination arrangements being populated with optical adapters receiving connectorized cables.
FIG. 45 is a bottom perspective view of the example patch panel arrangement of FIG. 44.
FIG. 46 is a top perspective view of the patch panel arrangement of FIG. 44 with the adapters and connectorized cables removed for ease in viewing.
FIG. 47 is an enlarged view of a section of FIG. 46.
FIG. 48 is a top plan view of the patch panel arrangement of FIG. 46.
FIG. 49 is a bottom plan view of the patch panel arrangement of FIG. 46.
FIG. 50 is a top perspective view of the patch panel arrangement of FIG. 46 with the termination arrangements exploded away from the base.
FIG. 51 is a bottom perspective view of the patch panel arrangement of FIG. 50.
FIG. 52 is a top perspective view of another example patch panel arrangement including termination arrangements pivotally mounted to a base, the termination arrangements being populated with optical adapters receiving connectorized cables.
FIG. 53 is a bottom perspective view of the example patch panel arrangement of FIG. 52.
FIG. 54 is a top perspective view of the base of FIG. 52 with the termination arrangements removed for ease in viewing;
FIG. 55 is a top perspective view of an example termination arrangement of FIG. 52 with the optical adapters and connectorized cables removed for ease in viewing;
FIG. 56 is a bottom perspective view of the termination arrangement of FIG. 12;
FIG. 57 is a top perspective view of the patch panel arrangement of FIG. 52 with the optical adapters and connectorized cables removed for ease in viewing;
FIG. 58 is a bottom perspective view of the patch panel arrangement of FIG. 57;
FIG. 59 is a top plan view of the patch panel arrangement of FIG. 57; and
FIG. 60 shows a perspective view of the cable management system for use with any of the enclosures of FIGS. 1-8.
FIG. 61 shows a top view of the cable management system of FIG. 60.
FIG. 62 shows a bottom view of the cable management system of FIG. 60
FIG. 63 shows an exploded view of the cable management system of FIG. 60.
FIG. 64 shows a perspective view of a second cable management system, in accordance with aspects of the present disclosure.
FIG. 65 shows a top view of the cable management system of FIG. 64.
FIG. 66 shows an exploded view of the cable management system of FIG. 64.
FIG. 67 shows a side exploded view of the cable management system of FIG. 64.
FIG. 68 shows a perspective view of a third cable management system, in accordance with aspects of the present disclosure.
FIG. 69 shows a top view of the cable management system of FIG. 68.
FIG. 70 shows a perspective view of an end section of the cable management system of FIG. 68.
FIG. 71 shows a perspective view of a fourth cable management system, in accordance with aspects of the present disclosure.
FIG. 72 shows a top view of the cable management system of FIG. 71.
FIG. 73 shows an exploded view of the cable management system of FIG. 71.
FIG. 74 shows another perspective view of an example configuration of the cable management system of FIG. 71.
FIG. 75 shows a top view of the example configuration of the cable management system of FIG. 71.
FIG. 76 shows another perspective view of an example configuration of the cable management system of FIG. 71.
FIG. 77 shows a perspective view of a fifth cable management system, in accordance with aspects of the present disclosure.
FIG. 78 shows an exploded view of the cable management system of FIG. 77.
FIG. 79 shows another perspective view of an example configuration of the cable management system of FIG. 77.
FIG. 80 shows another perspective view of an example configuration of the cable management system of FIG. 77.
FIG. 81 shows a perspective view of a sixth cable management system, in accordance with aspects of the present disclosure.
FIG. 82 shows a perspective view the cable management system of FIG. 81 with walls in an extended position.
FIG. 83 shows another perspective view of an example configuration of the cable management system of FIG. 82.
FIG. 84 shows a perspective view of an example of walls of the cable management system of FIG. 81 in the extended position.
FIG. 85 shows a perspective view of an example of walls of the cable management system of FIG. 81 in the collapsed position.
FIGS. 86-87 show a seventh cable management system in an example telecommunications box, in accordance with aspects of the present disclosure.
FIG. 88 shows a perspective view of the cable management system of FIGS. 86-87.
FIG. 89 shows a top view of the cable management system of FIGS. 86-87.
FIG. 90 shows another perspective view of the cable management system of FIGS. 86-87.
FIG. 91 shows another perspective view of an example configuration of the cable management system of FIGS. 86-87.

### DETAILED DESCRIPTION

Reference will now be made in detail to aspects of the present disclosure that are illustrated in the accompanying drawings. Wherever possible, the same reference numbers will be used throughout the drawings to refer to the same or like parts.

### Enclosures

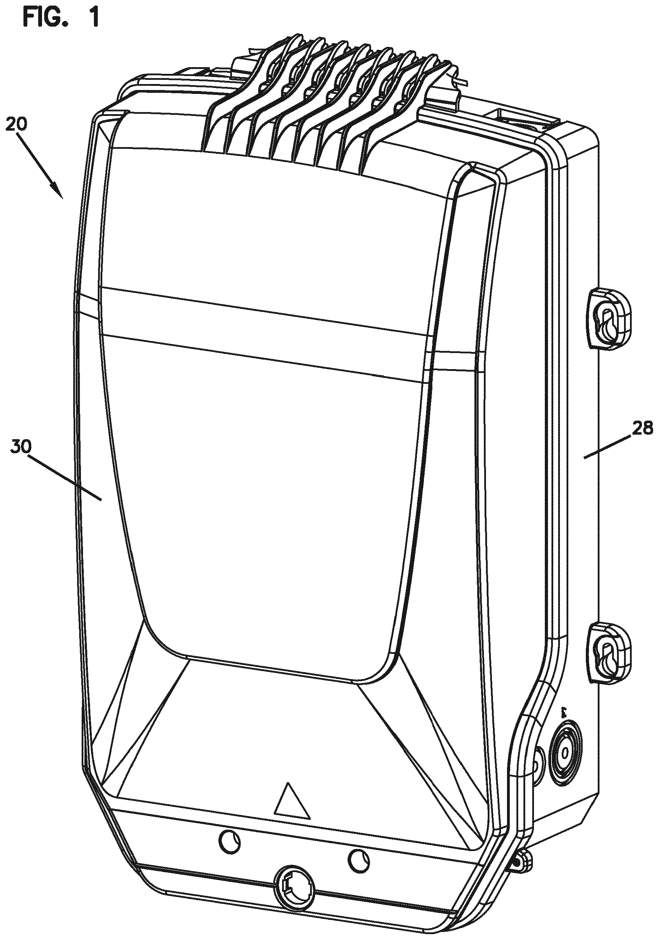

FIGS. 1 to 6 illustrate an enclosure 20 within which various components may be housed. For example, one or more splice tray assemblies 100, 200, 300, one or more connector termination assemblies 400, 500, one or more cable management arrangements 1100, 1200, 1300, 1400, 1500, 1600, 1700, one or more passive splitters, and/or one or more fan-out devices can be disposed within an interior of the enclosure 20. In certain examples, the enclosure 20 is a compact, wall mountable fiber enclosure for indoor and outdoor use. The enclosure 20 can be a variety of different sizes. In certain examples, the enclosure 20 is a BUDI enclosure manufactured by CommScope, Inc.

In the examples shown, the enclosure 20 includes a base 28 to which a cover 30 can mount to close an interior 31 of the enclosure 20. In certain examples, a gasket or other sealing member can be disposed between the base 28 and cover 30 to environmentally seal the interior 31 of the enclosure 20 when the cover 30 is closed. One or more cable port regions 32 enable cables (e.g., distribution cables, drop cables, etc.) to enter/exit the enclosure 20. In certain examples, the cable port regions 32 also seal around the incoming/outgoing cables to environmentally seal the enclosure interior 31. In various examples, the cable port regions 32 can define sealing gaskets (e.g., gel seals, rubber seals, foam seals, etc.), demateable connection interfaces (e.g., optical adapters, electrical sockets, etc.), or other ingress/egress structures.

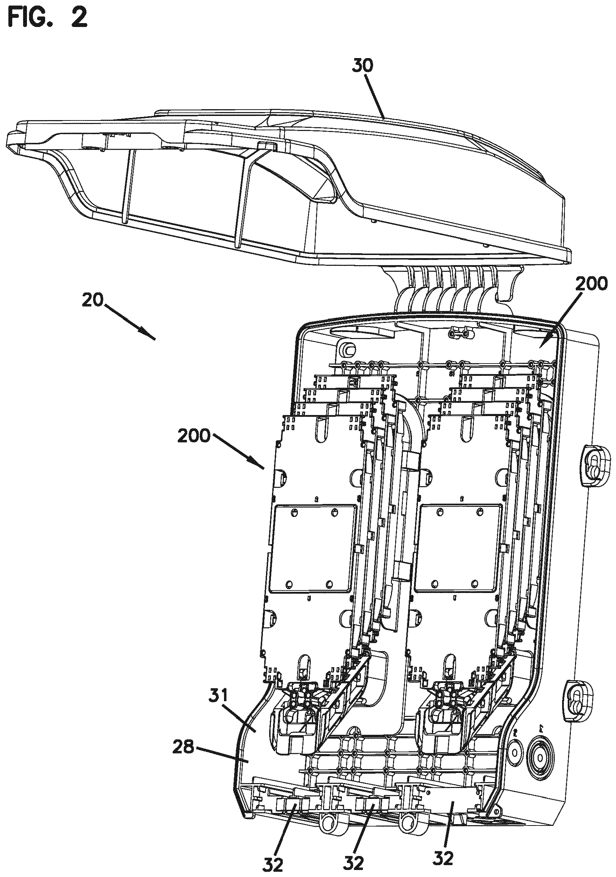

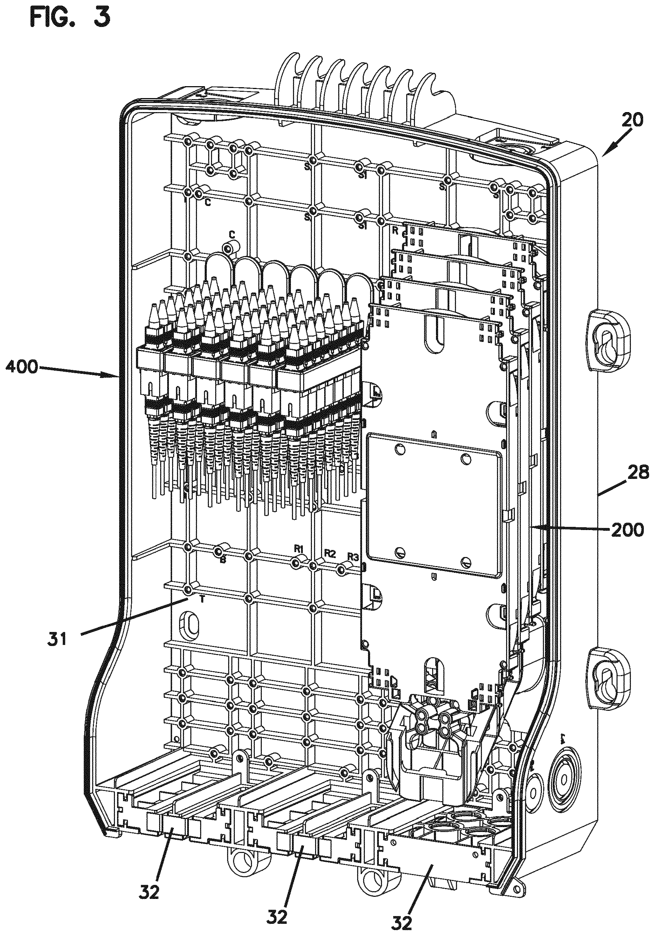

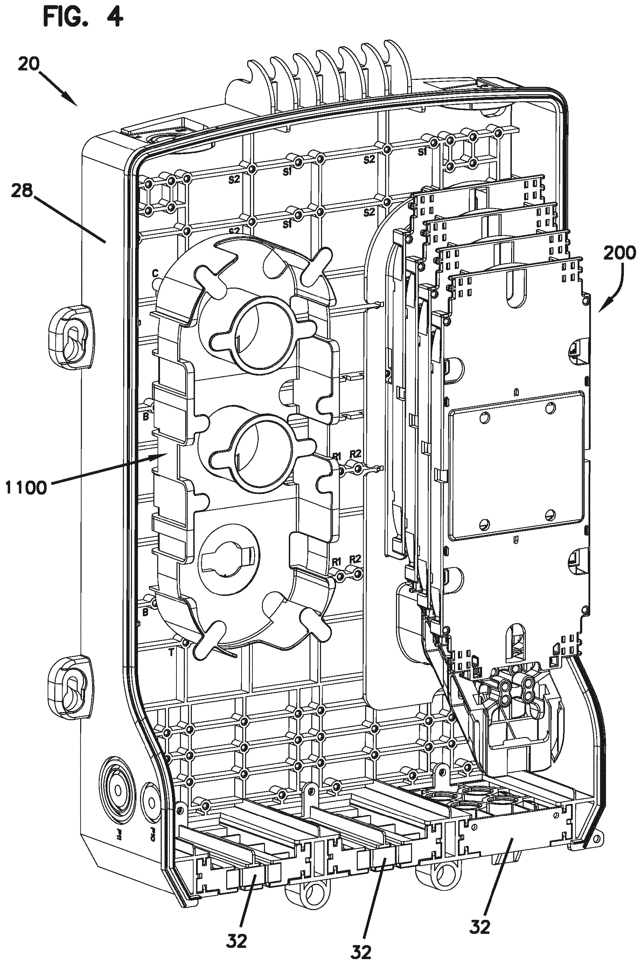

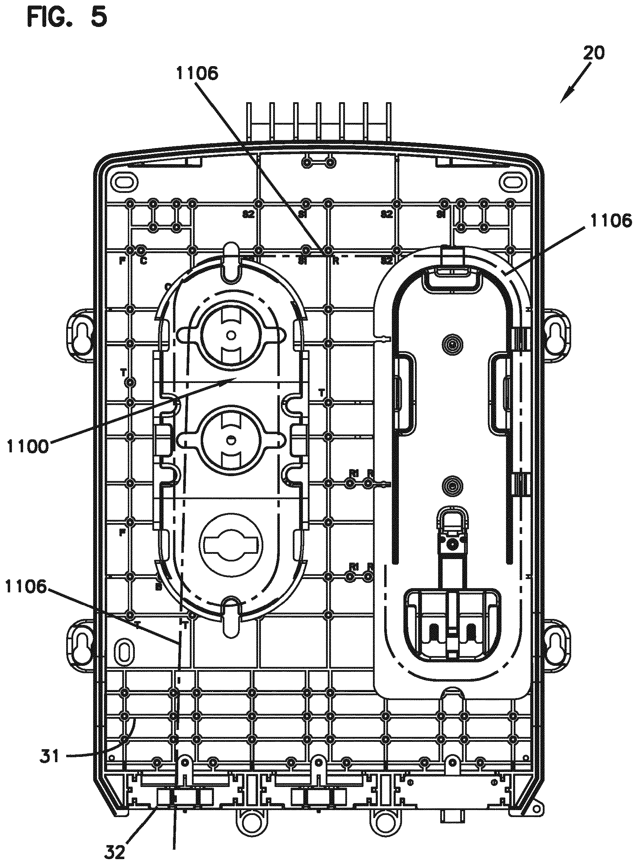

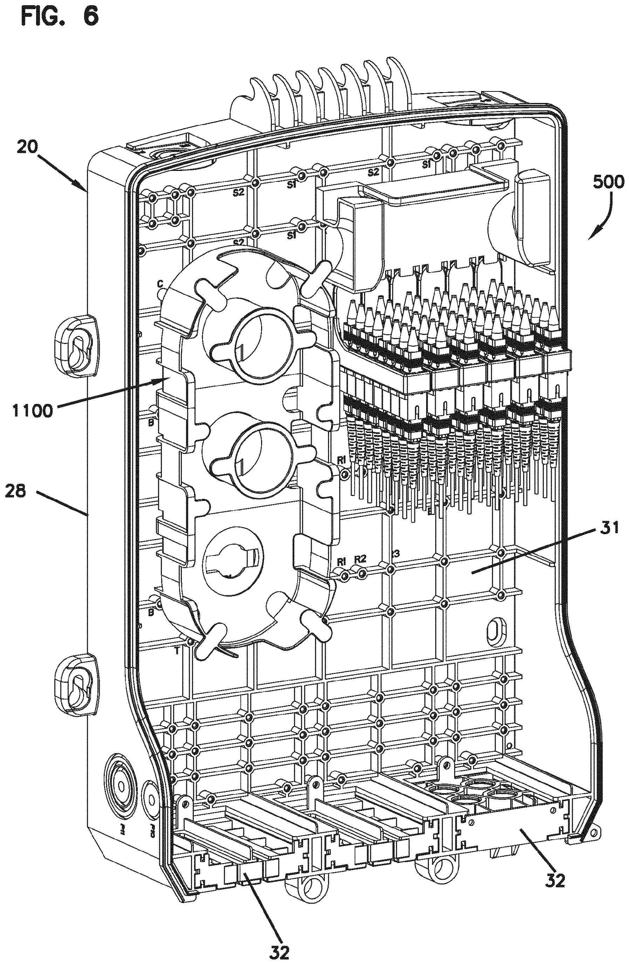

The enclosure 20 is customizable for various functions by selecting which components are installed within the enclosure 20. For example, FIG. 2 illustrates the enclosure 20 with two splice tray assemblies disposed within the interior 31. FIG. 3 illustrates the enclosure 20 with a splice tray assembly and a connector termination assembly disposed within the interior 31. FIGS. 4 and 5 illustrates the enclosure 20 with a splice tray assembly and a cable management assembly disposed within the interior 31. FIG. 6 illustrates the enclosure 20 with a connector termination assembly and a cable management assembly disposed within the interior 31.

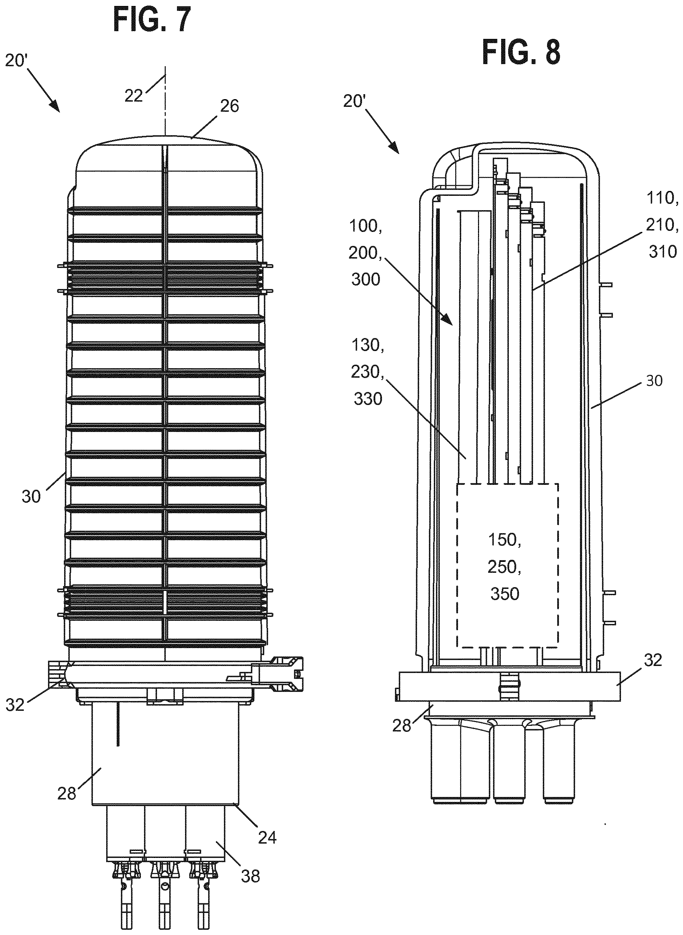

FIGS. 7 and 8 illustrate another suitable type of enclosure 20' for housing the disclosed components. The enclosure 20' defines a central longitudinal axis 22 that extends along a length of the enclosure 20' from a bottom end 24 to a top end 26. A base 28 defines the bottom end 24 of the enclosure 20' while a dome 30 defines the top end 26 of the enclosure 20'. The base 28 and the dome 30 are interconnected by a clamp 32 that mounts over flanges respectively defined by the base 28 and the dome 30. A seal can mount between the flanges to provide an environmental seal that prevents moisture, dust and, pests from entering the interior of the enclosure 20'. In some examples, the enclosure 20' is Fiber-Optic Splice Closures (FOSC^{™}). Although a pedestal type enclosure 20' is shown, enclosure 20' may also be configured for aerial, buried, or underground applications.

A plurality of primary cable through-ports extend through the base 28 of the enclosure 20' for allowing cables 40 (e.g., trunk cables, drop cables, or other cables) to enter the enclosure 20'. To accommodate drop cables or other smaller cables (i.e., secondary cables), secondary cable tube assemblies 38 are mounted in some of the primary cable through-ports. The remainder of the primary cable through-ports 36 can receive plugs used to seal the unoccupied primary cable through-ports.

Referring to FIG. 8, a tray assembly 100 is shown within the interior of the enclosure 20'. However, any of the components disclosed herein may be disposed within the enclosure 20'.

### Splice Tray Assemblies

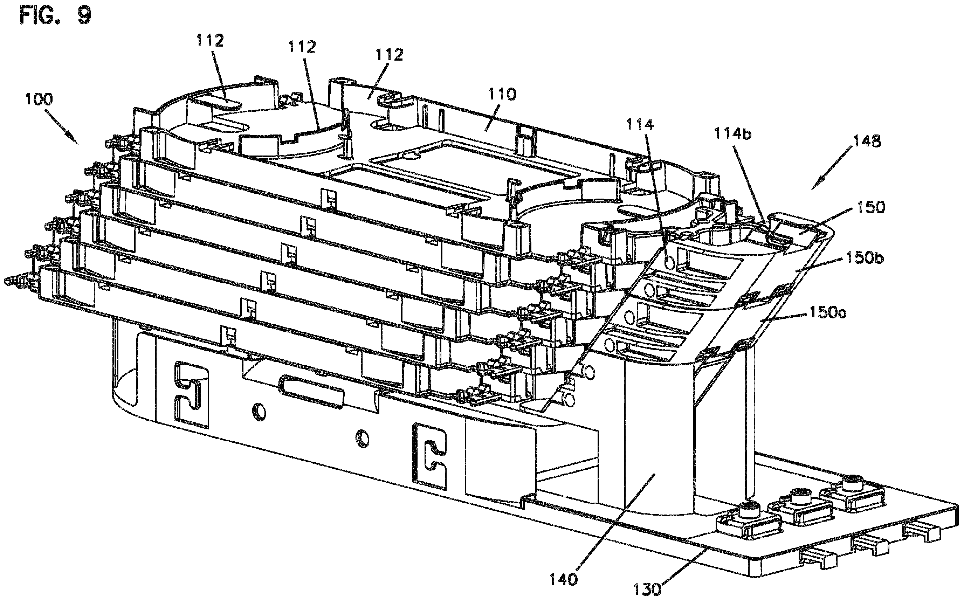

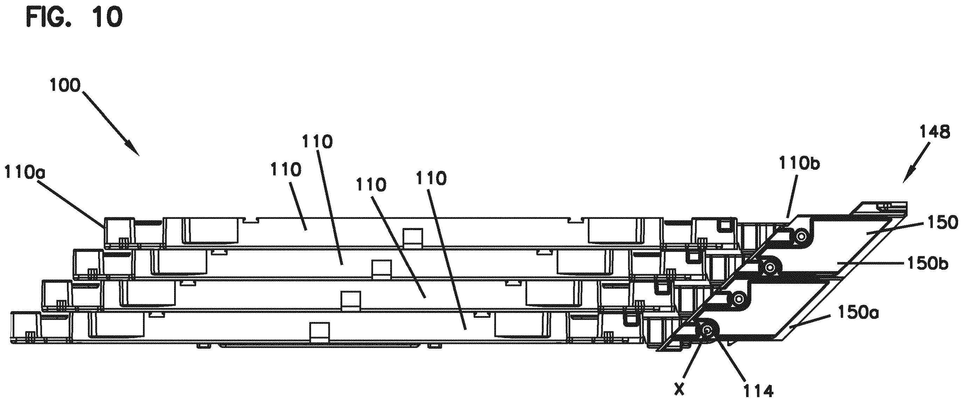

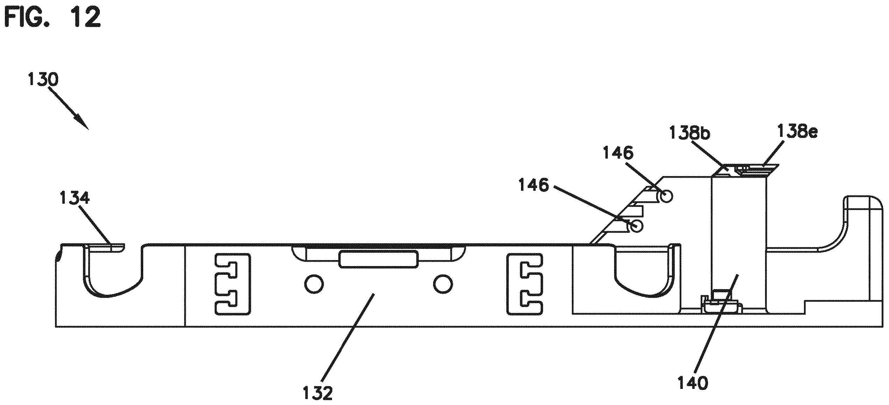

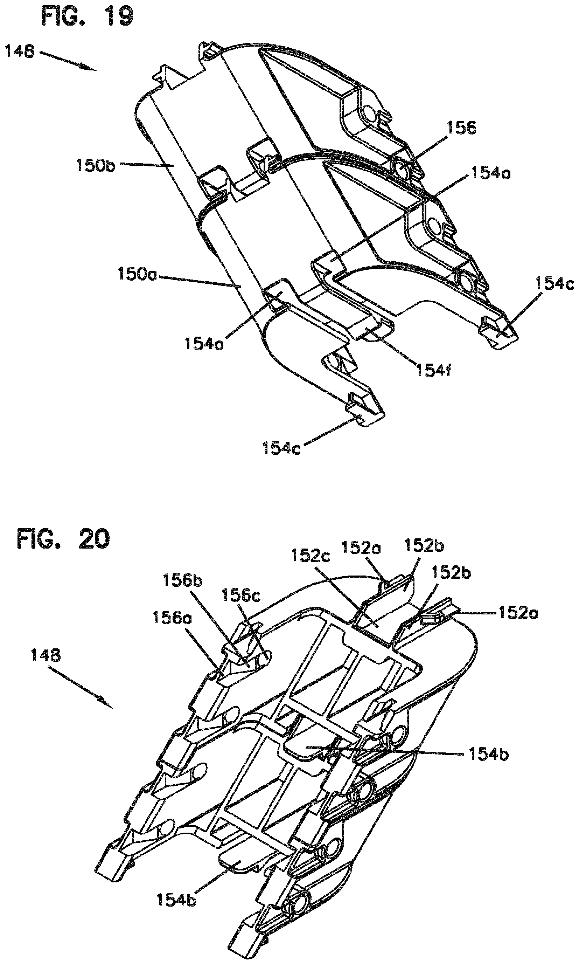

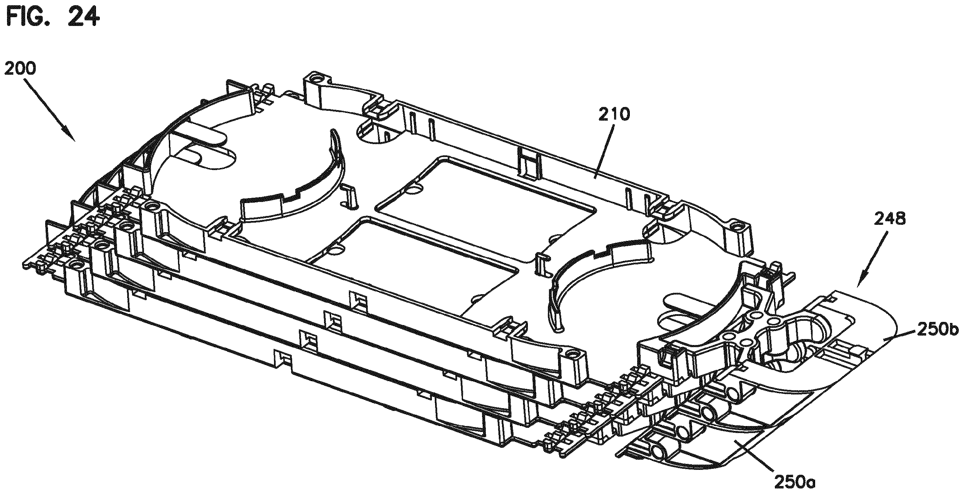

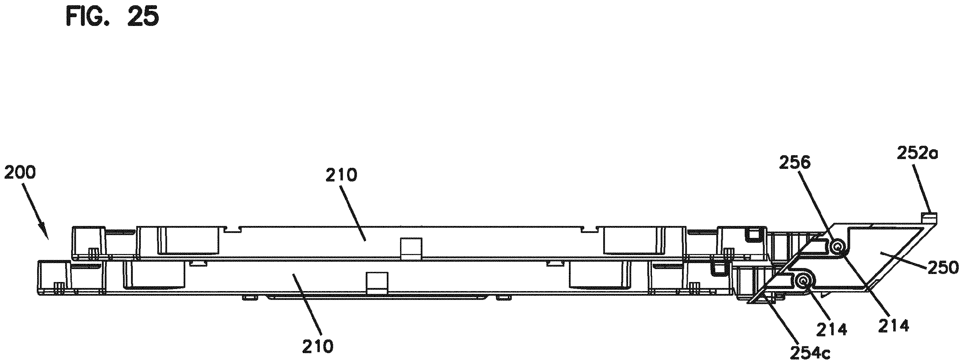

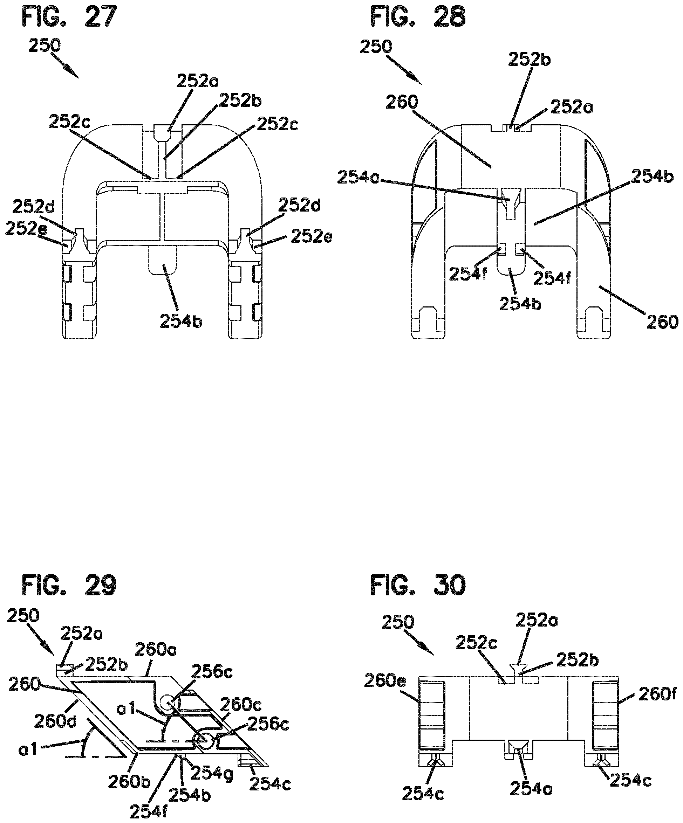

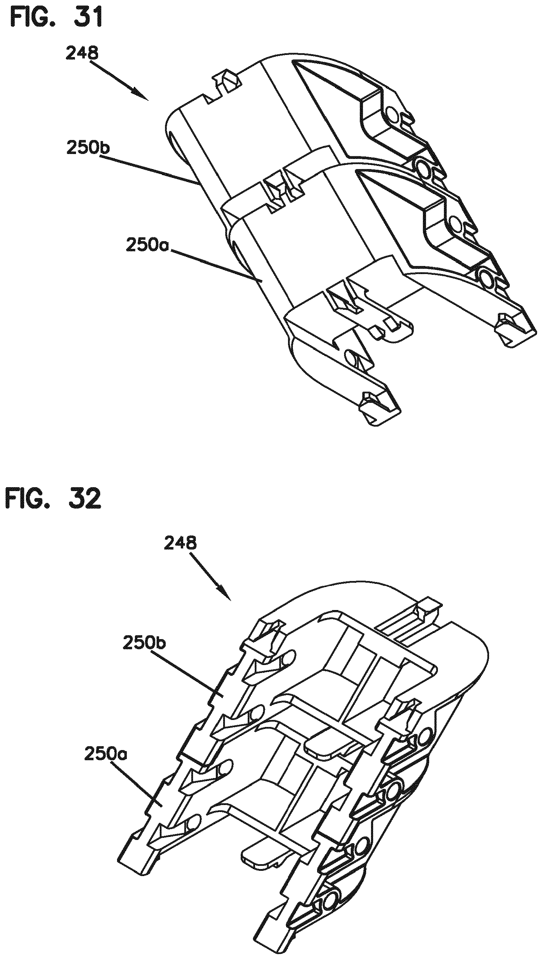

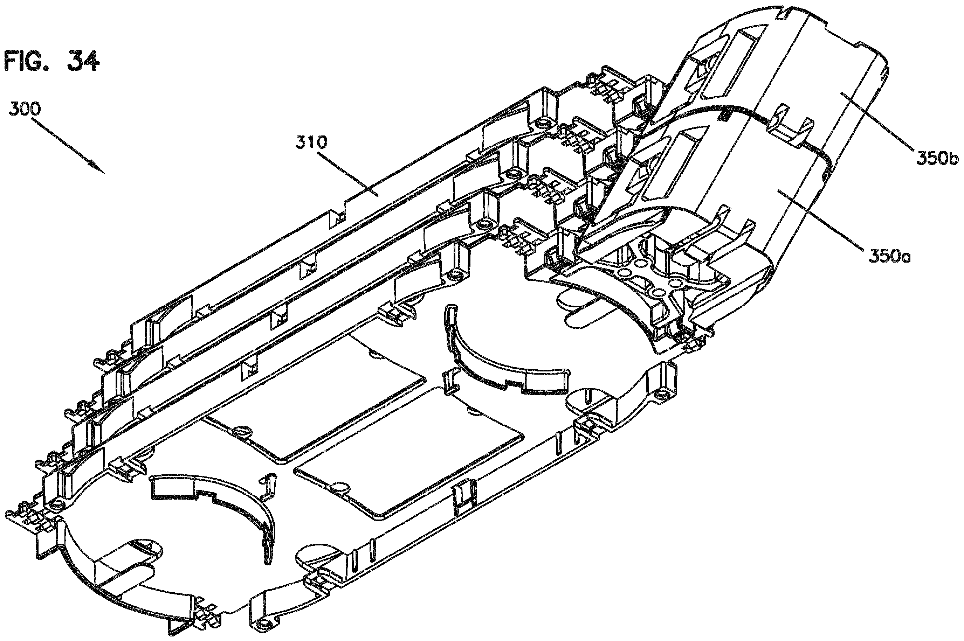

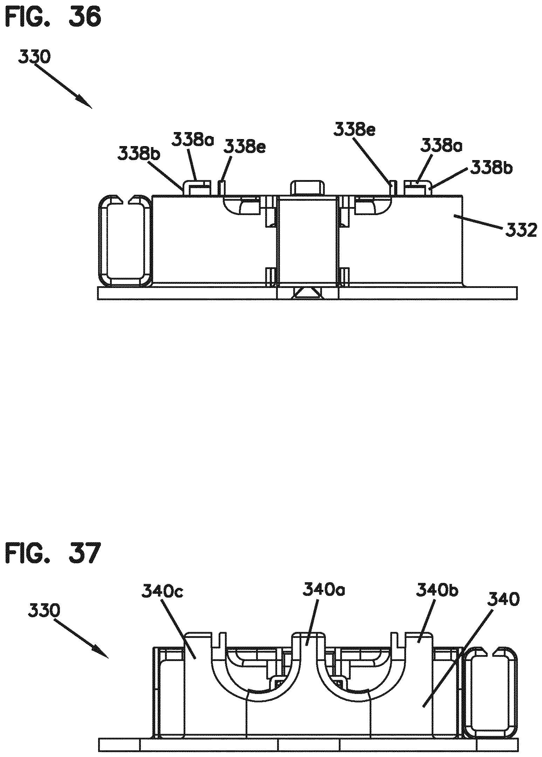

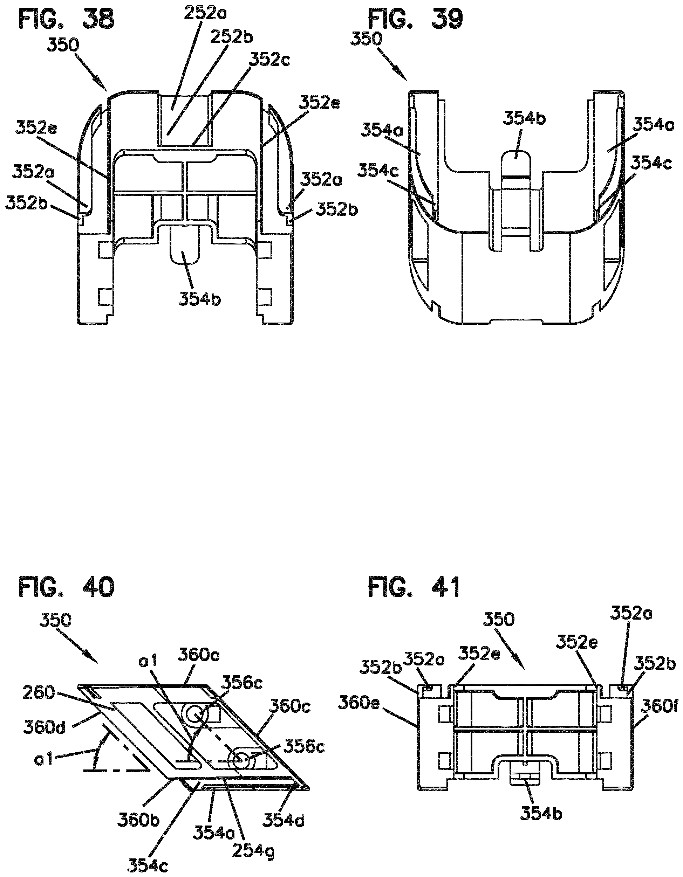

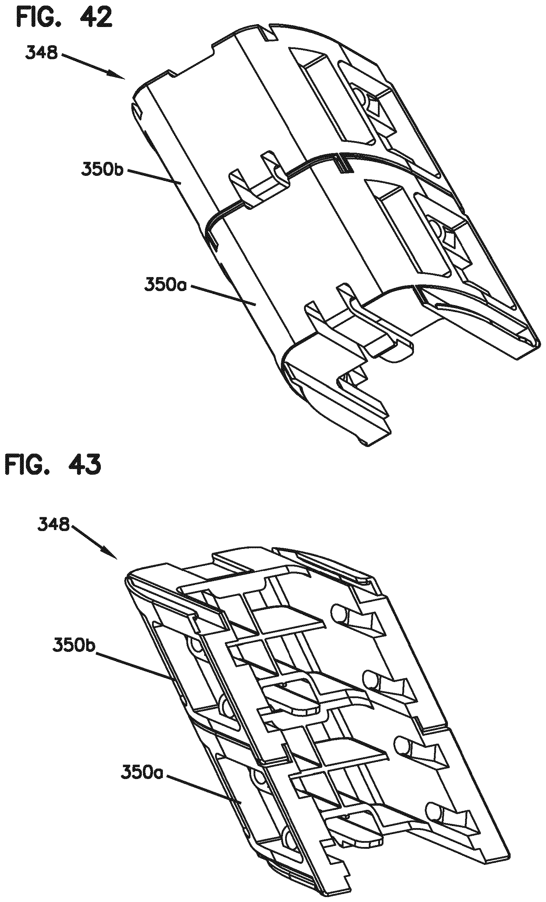

Referring to FIGS. 9-43, various examples of tray assemblies 100, 200, 300 are shown.

Referring to FIGS. 9-20, a first example of a tray assembly 100 is presented. As shown, the tray assembly 100 includes a base structure 130, a modular tower 148 formed by two interconnected tower modules 150a, 150b, and a plurality of hinged trays 110 some of which are mounted to the tower modules 150a, 150b. For ease of reference, the tower modules 150a and 150b will be referred to as tower module 150. While a base structure 130 is described as being included with the tray assembly 100, the tray assembly 100 may be formed without a base structure 130. Figure 4 shows such an arrangement, which can also be referred to as a tray assembly 100.

The tray assembly 100 includes a plurality of hinged trays 110 supported by a modular tower 150, which is in turn supported by a base structure 130. The hinged trays 110 are individually rotatable with respect to the base structure 130 and modular tower 150 to allow for access to any splice without disturbing fibers in other hinged trays 110. In one aspect, the trays house and support fiber-optic cables and ensure that fiber-optic cables can be spliced and housed, quickly and easily. Additionally, the hinged trays 110 support fast, mass splicing jobs in feeder and long-haul areas of the network. The hinged splice hinged trays 110 are compatible with many common cable types.

In one aspect, each of the tower modules 150 is unitarily formed as a main body 160 extending from a first connecting side 160a to a second connecting side 160b, between a front end 160c and back end 160d, and between a first side 160e and a second side 160f. The main body may be formed from a single material, such as a polymeric material. In one aspect, the main body 160 has the general shape of a parallelogram in which the front and back ends 160c and 160d are generally parallel to each other, in which the first and second connecting sides 160a, 160b are generally parallel to each other, and in which the front and back ends 160c, 160d are disposed at an oblique angle a1 to the first and second connecting sides 160a, 160b. In the example shown, the angle a1 is about 45 degrees. This configuration allows the stacked tower modules 150 to have front and back ends 160c, 160d that are aligned with each other along the oblique angle, which enables the attached hinged trays 110 to be offset from each other in a direction from the first end 110a towards the second end 110b.

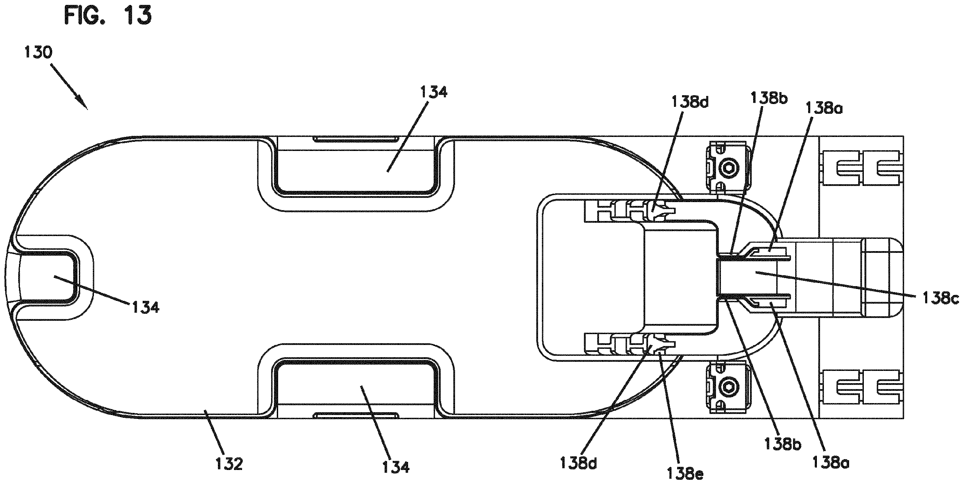

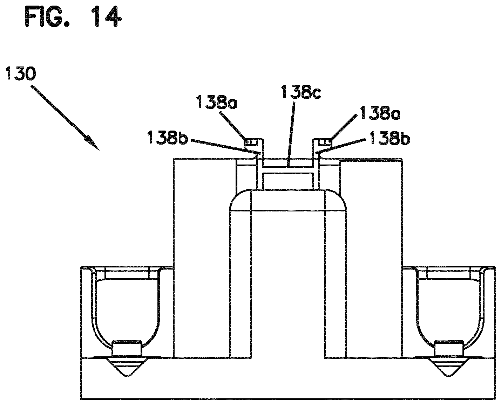

To enable the tower modules 150 to be interconnected with each other, each tower module 150 is provided with a first attachment arrangement 152 on the first connecting side 160a and a second attachment arrangement 154 on the second connecting side 160b of the main body 160. The first attachment arrangement 152 is provided with features, described below, that are complementary to features of the second attachment arrangement 154. Accordingly, and as most easily seen at Figures 13 and 14, the first attachment arrangement 152 of the tower module 150a can interconnect with the second attachment arrangement 154 of the second tower module 150b, and vice-versa. With such an arrangement, a tower 148 holding a desired number of hinged trays 110 can be constructed by interconnecting a number of corresponding tower modules 150.

The hinged trays 110 may be telecommunications trays configured for holding or retaining telecommunications components and cables. In one example, the hinged trays 110 are fiber-optic trays configured with sidewalls and internal structures 112 (e.g. bend radius limiters, retention tabs, etc.) for managing fiber-optic cables entering and exiting the enclosure 20. In one aspect, each hinged tray 110 extends between a first end 110a and a second end 110b with a hinge arrangement 114 being located proximate the second end 110b.

The hinge arrangement 114 is received by a tray attachment arrangement 156 of the tower module 150, and allows for the hinged tray 110 to rotate about a pivot axis X about the tower module 150. In the example shown, the hinge arrangement 114 includes a pair of outwardly extending projections 114a, 114b that are received in a snap-fit manner by a pair of opposing attachment arrangements 156, each of which including a guide slot 156a, a ramped portion 156b, and an aperture 156c. To connect the hinged tray 110 to a module 150a or 150b, the projections 114a, 114b are first aligned into the guide slots 156a and then pressed towards the apertures 156c. The ramped portions 156b operate to deflect the projections 114a, 114b inwardly until they reach the apertures 156c, at which point the projections 114a, 114b snap into the apertures 156c for a snap-fit connection.

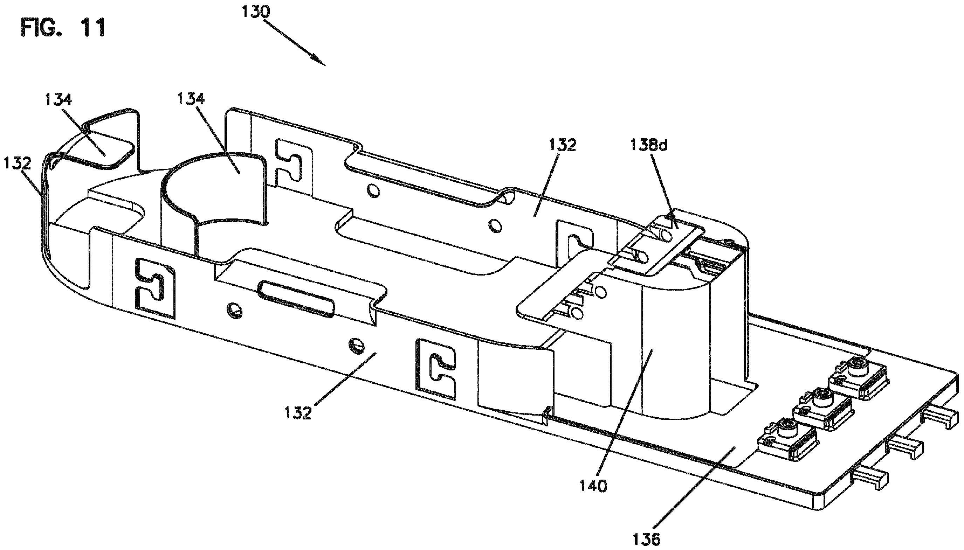

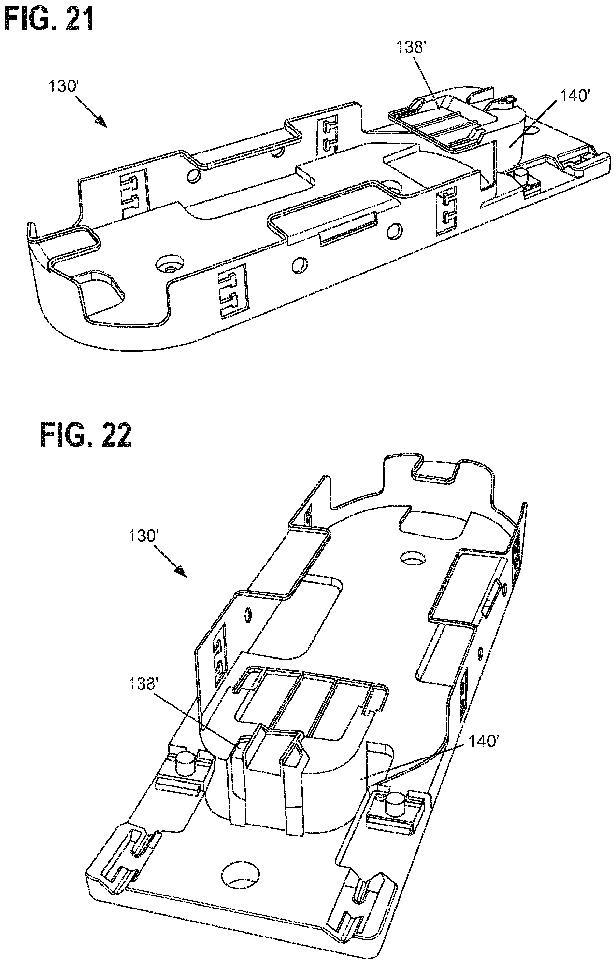

Referring to FIGS. 11-14, the base structure 130 is shown in isolation. In one aspect, the base structure 130 extends between a first end 130a and a second end 130b. The base structure 130 is shown as including a plurality of sidewalls 132 and cable management structures 134 extending from a base surface 136. The base structure is also shown as including a tower 140 extending from the base surface 138 that is configured to rotatably support trays in the same manner as previously described with respect to the hinge arrangement 114 and attachment arrangement 156. In an alternative construction, as shown at FIGS. 21-22, the tower 140 is constructed without the attachment arrangements 156 such that all of the trays 110 are supported by a tower module 150.

In the example shown, the base structure 130 also provided with an attachment arrangement 138 that connects to a base end attachment arrangement 152 of the tower module 150 for enabling a tower module 150 to be removably connected to the base structure 130. The attachment arrangement 138 can include multiple features for allowing such a connection. It is noted that the features of the attachment arrangement 138 on the base 130 are similar to an attachment arrangement 152 provided on the tower module 150. Accordingly, the following description for attachment arrangement 138 is fully applicable for attachment arrangement 152.

In one aspect, the attachment arrangement 138 can include a pair of flange members 138a extending laterally from projections 138b. The attachment arrangement 138 can further include a catch member 138c, configured as a web extension in the example shown, extending between the projections 138b. The tower module 150 can be provided with a pair of corresponding guide slots 154a to slidingly receive the flange members 138a and a deflectable latch member 154b that latches onto the catch member 138c once the tower module 150 has sufficiently slid onto the attachment arrangement 138. The attachment arrangement 138 can also include a pair of guide slots or cavities 138d for slidably receiving a corresponding pair of projections 154c on the tower module 150. The cavities 138d and projections 154c can be configured to provide a positive stop (e.g. with contacting or stop features 138e, 154d) such that the tower module 150 will not slide past a desired final insertion point. The latch member 154b and catch member 138c are configured to engage with each other at this same position of the tower module 150 such that the tower module 150 cannot be slid off of the attachment arrangement 138 without decoupling the latch member 154b from the catch member 138c. The latch member 154b is shown as being provided with a deflectable arm 154e having a ramped surface 154f and an adjacent catch surface 154g that engages with the catch member 138c. The ramped surface 154f allows for the latch member arm 154e to deflect such that the ramped and catch surfaces 154f, 154g slide along the catch member 138c until the catch surface slides sufficiently beyond the catch member 138c, at which point, the latch arm 134e deflects back to its relaxed positon and the catch surface 154g engages against the catch member 138c. The latch member 154b can be decoupled from the catch member 138c by deflecting the latch member arm 154e in a direction away from the base surface 136 such that the catch surface 154g disengages with the catch member of the 138c of the attachment arrangement 138.

As noted previously, each tower module 150 is additionally provided with an attachment arrangement 152 that has features identical or essentially similar to the attachment arrangement 138. For example the attachment arrangement 152 can include a pair of flanges 152a, projections 152b, a catch member 152c, and cavities or guide slots 152d. This configuration allows for the multiple tower modules 150 to be connected to each other to create a module tower assembly, and thus a modular tray assembly.

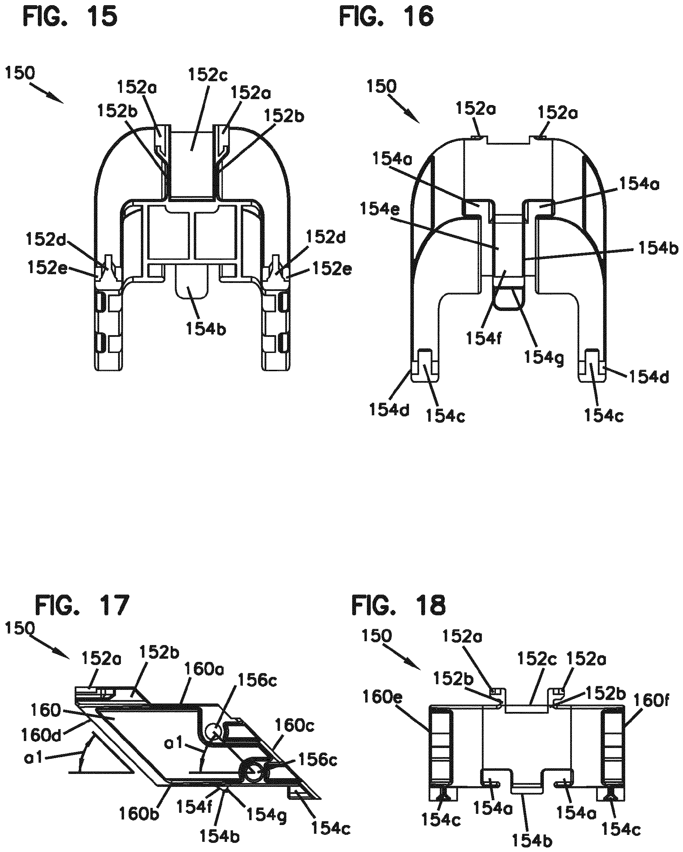

In the example shown, each tower module 150 is provided with two pairs of apertures 156c such that two hinged trays 110 can be supported by each module. However, it is noted that the tower module 150 could be provided with only one set of apertures 156c for supporting only a single hinged tray 110 or could be provided with more than two sets of apertures 156c, such as three or four sets of apertures 156c for correspondingly holding three or four hinged trays 110. Also, and as most easily seen at FIG. 17, the pairs of apertures 156c are offset from each other at an angle a1 such that the upper pair is recessed horizontally (as shown on the page) with respect to the lower pair. This construction allows the hinged trays 110 to be slightly offset from each other in the lengthwise direction (i.e. upper tray 110 is offset towards second end 110b relative to the lower tray, as most easily seen at Figure 4). In the example shown, angle a1 is about 45 degrees. As configured, the features of the attachment arrangement 152 are offset from the features of the attachment arrangement 155 such that the angle a1 and horizontal offset of the trays 110 can be consistently maintained when multiple tower modules 150 are assembled together.

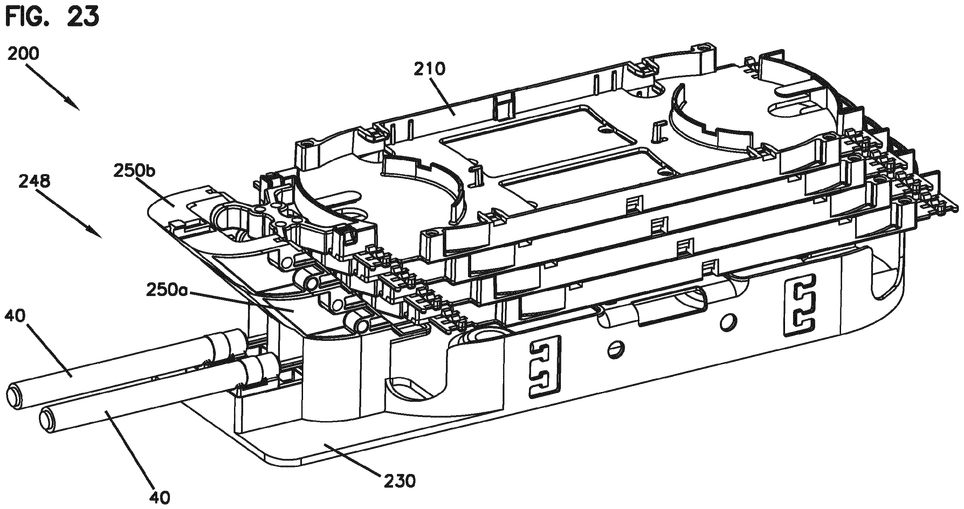

Referring to FIGS. 23-32, a second example of a tray assembly 200 that may be used with any of the enclosures of FIGS. 1-8 is shown. The tray assembly 200 shares many common features with tray assembly 100. For example, tray assembly 200 includes a base supporting interconnected tower modules that support hinged trays. Thus, the previous discussion for tray assembly 100 is largely applicable to tray assembly 200. Where similar features to tray assembly 100 are discussed, similar 200-series reference numbers will be used (e.g. 200 instead of 100). The discussion in this section will be primarily limited to the differences between the examples. The primary difference between tray assembly 200 and tray assembly 100 is the means by which the tower modules are connected to each other.

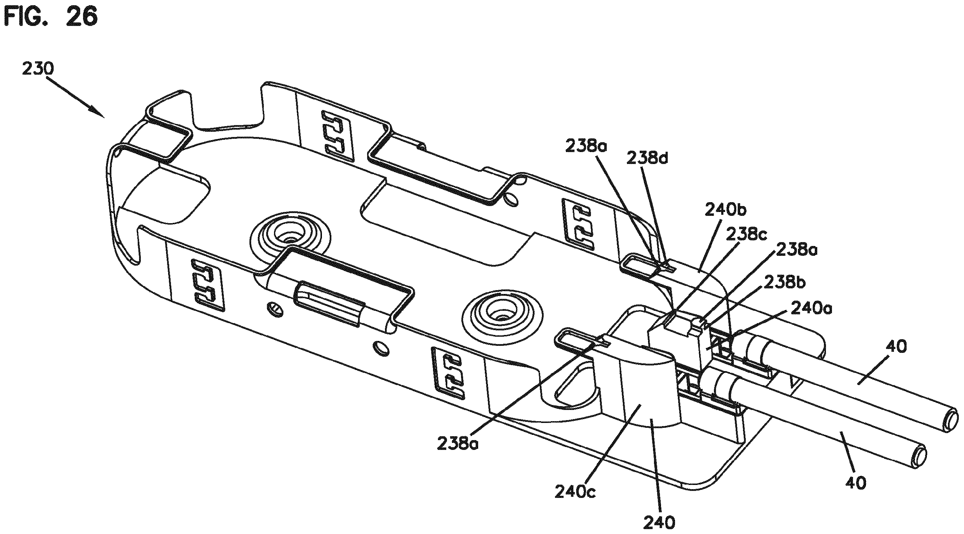

Referring to FIG. 26, it can be seen that the base 230 of the tray assembly 200 is configured with a tower 240 that does not include a separate attachment arrangement for holding the hinged trays 210. Accordingly, all of the hinged trays 210 of the tray assembly 200 are supported by one of the tower modules 250. The tower 240 of the base 230 is also provided with a split configuration having first, second, and third portions 240a, 240b, 240c to allow for central cable entry into the base 230, wherein a first cable 40 extends between portions 240a and 240b and a second cable 40 extends between portions 240b and 240c. In the particular example shown, the base 230 is configured to accept cables 40 that have been terminated prior to installation into the base, for example a cable using a TENIO cable termination manufactured by CommScope of North Carolina, USA. The hinge arrangement 214 on the tray 210 and the tray attachment arrangement 256 on the base 240 are configured similarly to that shown with the tray assembly 100.

The attachment arrangement 238 on the base tower 240, and the similarly arranged first attachment arrangement 252 located on the first connection end 260a of the tower module base 260, are each configured with a t-shaped arrangement including a flanged member 238a, 252a and a supporting projection member 238b, 252b. The flanged member 238a, 252a and projection member 238b, 252b are received into a guide slot 254a of the second attachment arrangement 254 on the tower module body 260. The arrangements 238, 252 are also provided with a catch member 238c, 252c to allow a latch member 254b of the second attachment arrangement 254 to lock the tower module 250 to the base 230 or to another tower module 250. The attachment arrangement 238, 252 is also provided with a pair of guide slots 238d, 252d with stop members 238e, 252e that receive projections 254c of the second attachment arrangement 254. The guide slots 238d, 252d and projections 254c are configured similarly to those provided on the first example of the tower module 150.

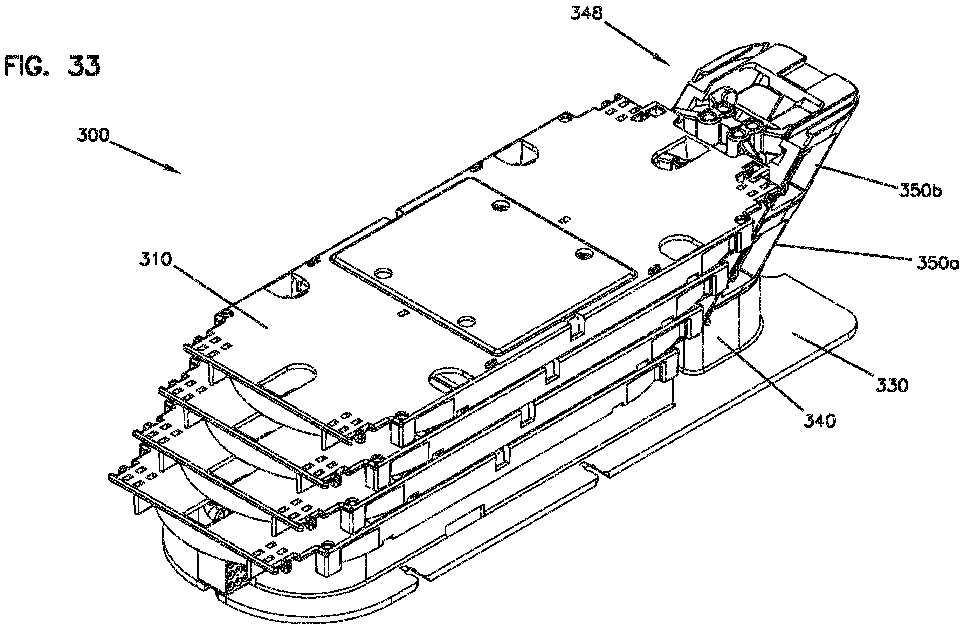

Referring to FIGS. 33-43, a third example of a tray assembly 300 that may be used with any of the enclosures of FIGS. 1-8 is shown. The tray assembly 300 shares many common features with tray assemblies 100 and 200. For example, tray assembly 300 includes a base supporting interconnected tower modules that support hinged trays. Thus, the previous discussion for tray assemblies 100, 200 is largely applicable to tray assembly 300. Where similar features to tray assembly 300 are discussed, similar 300-series reference numbers will be used (e.g. 300 instead of 100). The discussion in this section will be primarily limited to the differences between the examples. The primary difference between tray assembly 300 and tray assemblies 100, 200 is the means by which the tower modules are connected to each other.

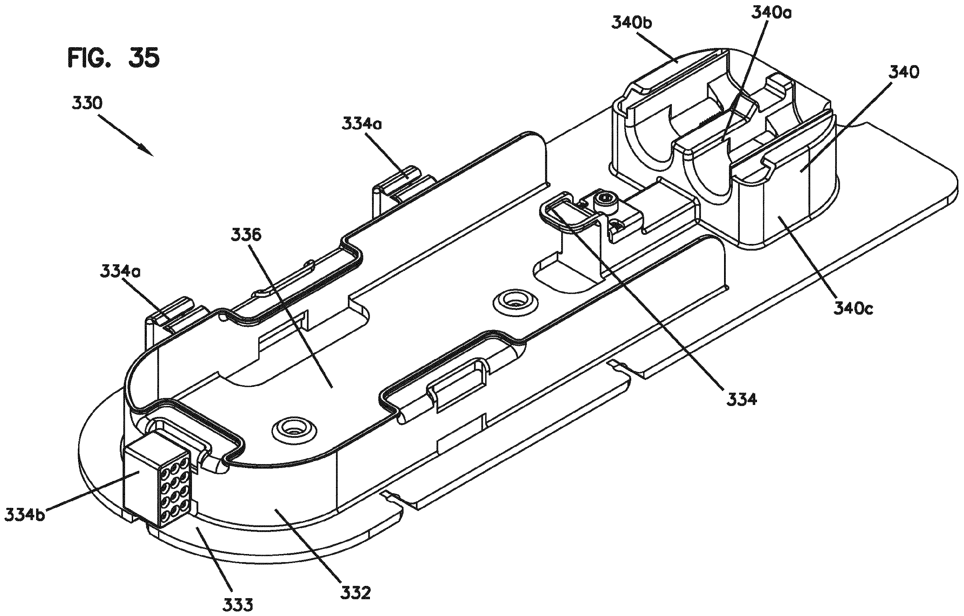

Referring to FIG. 35, it can be seen that the base 330 of the tray assembly 300 is configured with a tower 340 that does not include a separate attachment arrangement for holding the hinged trays 310. Accordingly, all of the hinged trays 310 of the tray assembly 300 are supported by one of the tower modules 350. The tower 340 of the base 330 is also provided with a split configuration having first, second, and third portions 340a, 340b, 340c to allow for central cable entry into the base 330, wherein a first cable 40 extends between portions 340a and 340b and a second cable 40 extends between portions 340b and 340c. The hinge arrangement 314 on the tray 310 and the tray attachment arrangement 356 on the base 340 are configured similarly to that shown with the tray assembly 100 and 200.

The attachment arrangement 338 on the base tower 340, and the similarly arranged first attachment arrangement 352 located on the first connection end 360a of the tower module body 360, are each configured with opposite facing guide walls 338e, 352e running parallel to an L-shaped arrangement including a flanged member 338a, 352a and a supporting projection member 338b, 352b. The flanged members 338a, 352a and projection members 338b, 352b are slidably received into channels defined by oppositely facing L-shaped arrangements on the second attachment arrangement 354, including a flanged member 354a supported by a projection 354c. The arrangements 338, 352 are also provided with a catch member 338c, 352c to allow a latch member 354b of the second attachment arrangement 354 to lock the tower module 350 to the base 330 or to another tower module 350. In order to provide a stop when inserting the tower module 350 onto the base 330 or onto another tower module 350, the projections 352b are curved inwardly while and end wall 354d is provided at the end of projections 354c.

The tray assembly 300 also differs from the other examples in that the sidewall 332 is inwardly inset from the outer perimeter of the base surface 336. This configuration allows for a cable routing pathway 333 to be established along the base surface 336 on the exterior side of the sidewall 332. To secure cables routed along the cable routing pathway 333, cable management structures 334 may be provided. In the example shown, cable management structures 334a configured as rectangular rings with an open access slot (e.g. a tube-shaped clip) are provided to retain bundled cables along a first segment of the cable routing pathway 333. A cable management structure 334b configured to hold individual cables or tubes is also shown as being provided along the cable routing pathway 333. Many possible configurations exist for providing cable management structures along the cable routing pathway 333.

### Connector Termination Assemblies

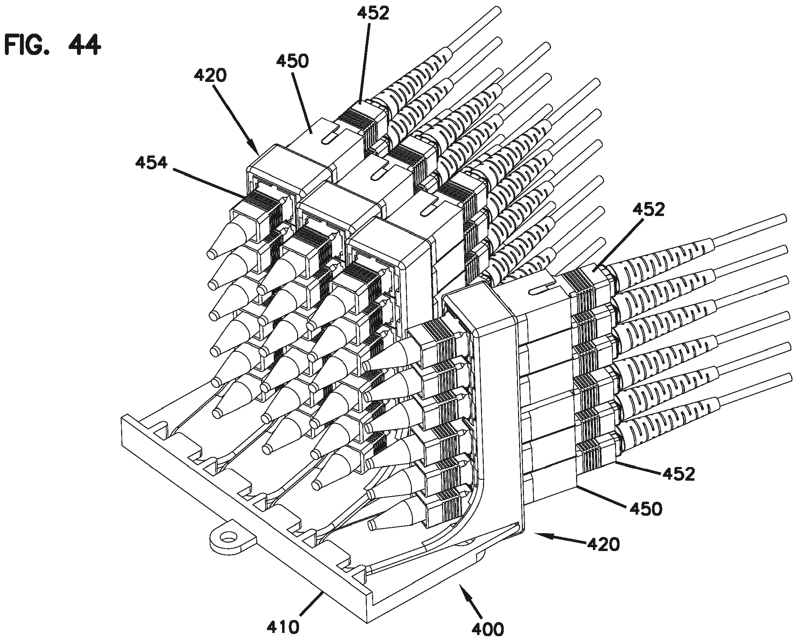

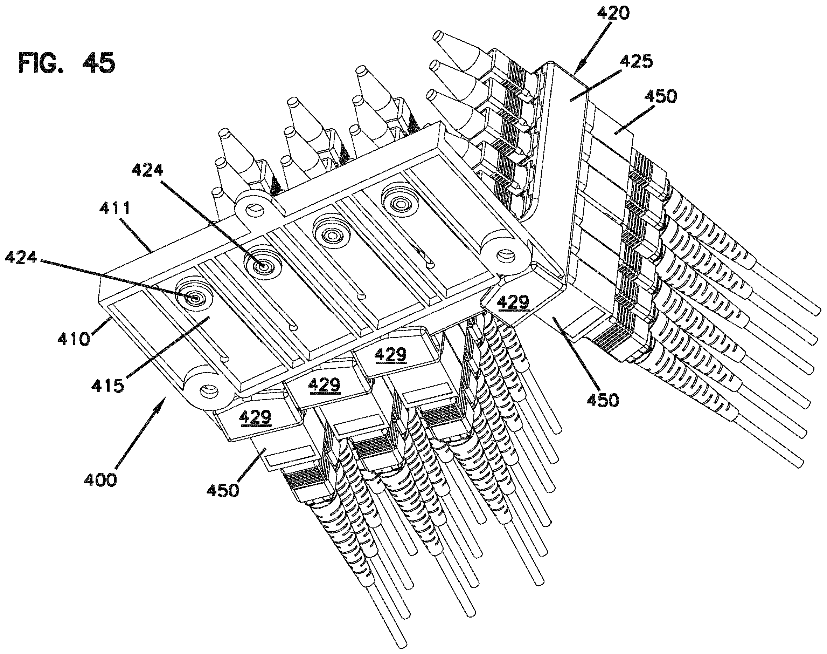

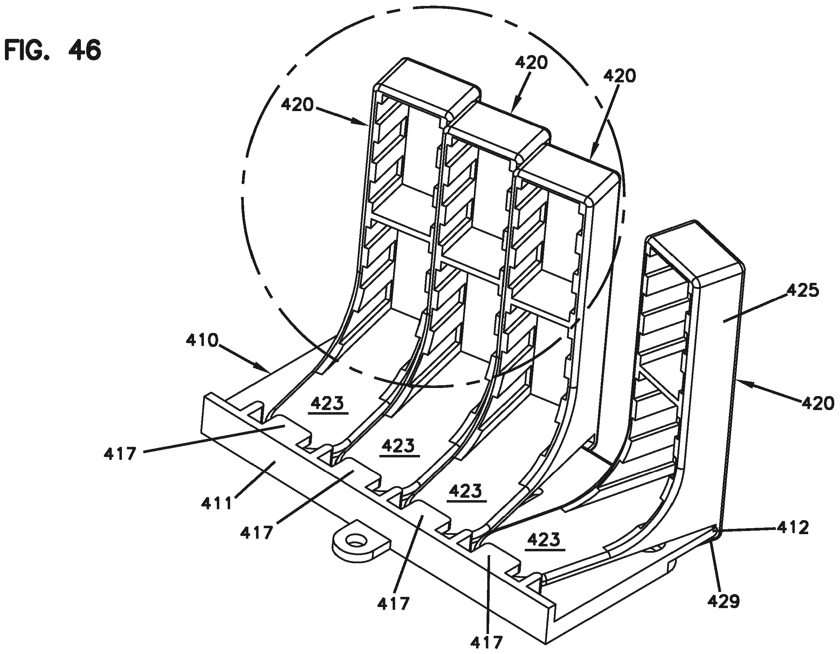

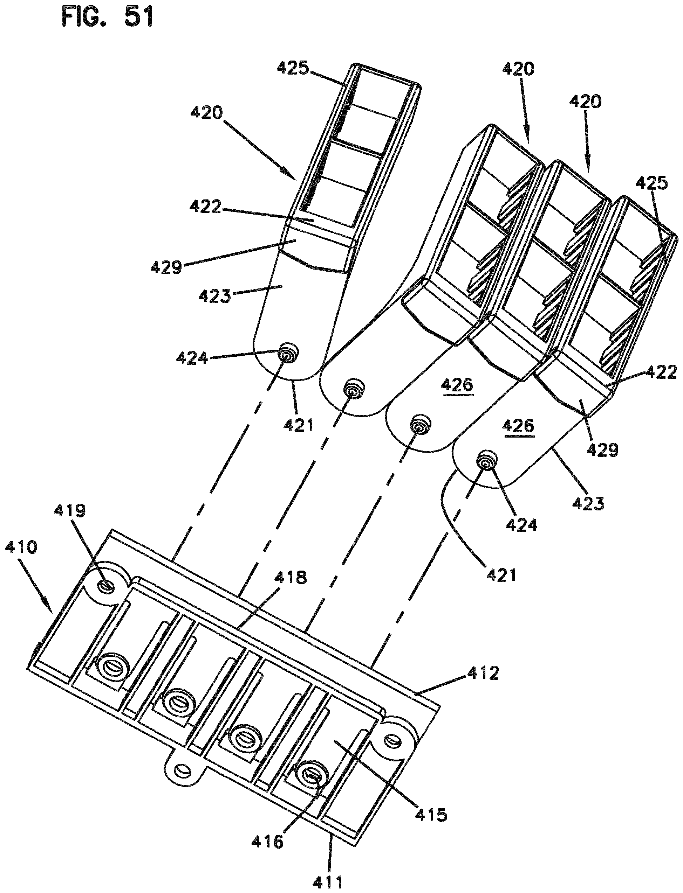

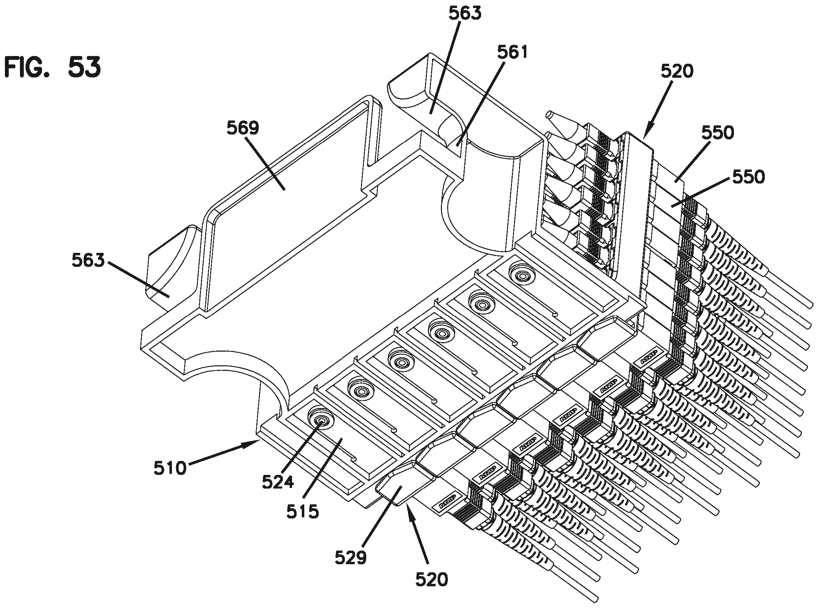

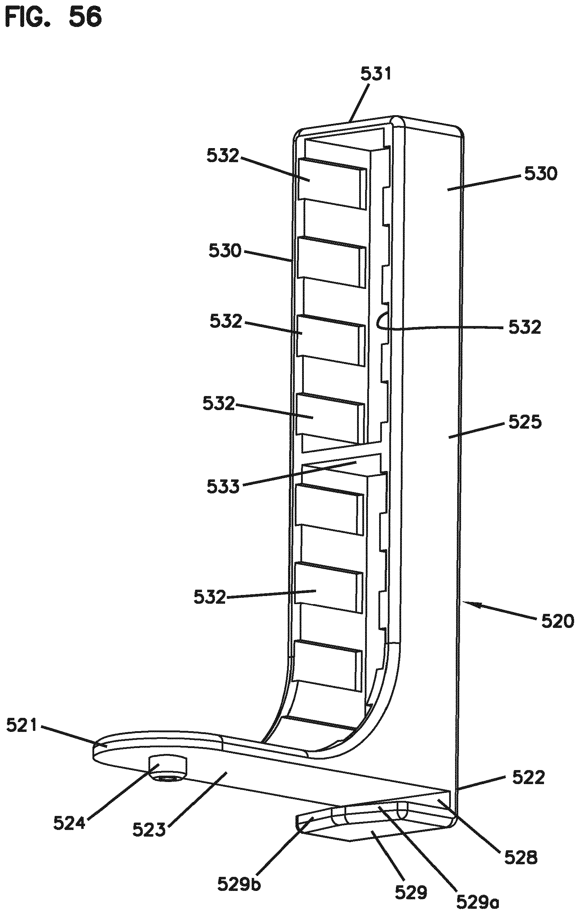

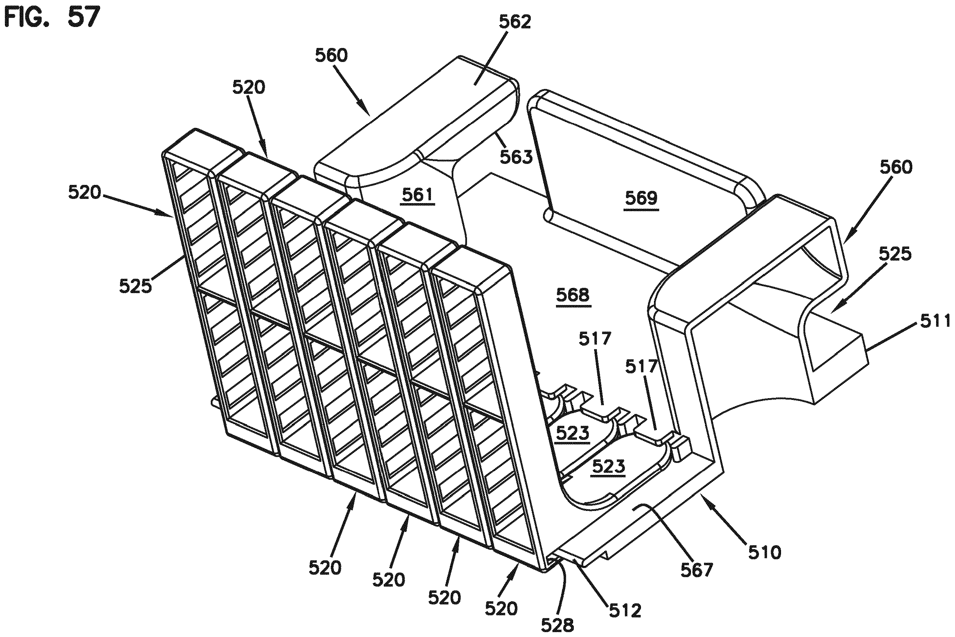

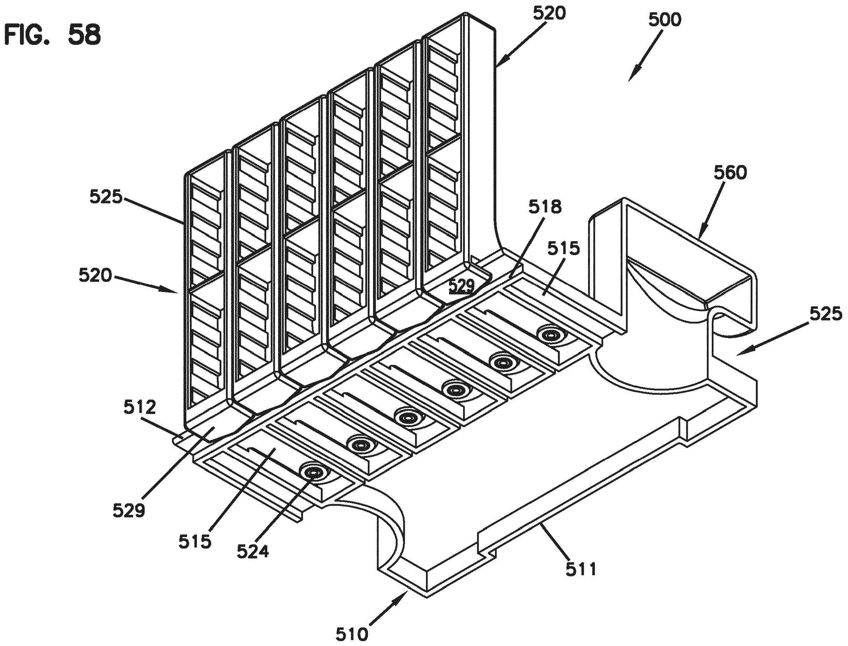

Referring to FIGS. 44-59, various examples of connector termination assemblies suitable for use with any of the enclosures of FIGS. 1-8 are illustrated.

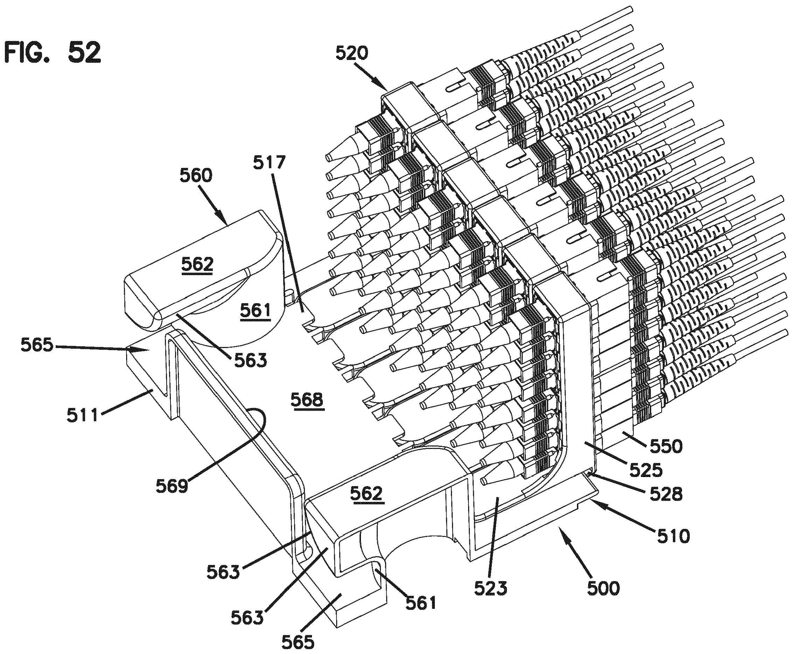

A connector termination assembly (otherwise referred to as a patch panel) includes a plurality of termination arrangements mounted to a base. FIGS. 44-51 illustrate a first example patch panel 400 having termination arrangements 420 mounted to a base 410; FIGS. 52-59 illustrate a second example patch panel 500 having termination arrangements 520 mounted to a base 510.

Each termination arrangement 420, 520 holds one or more optical adapters 450, 550, respectively. For example, each termination arrangement 420, 520 may hold the optical adapters 450, 550 in a stack. Each termination arrangement 420, 520 is separately movable relative to the base 410, 510. In certain implementations, each termination arrangement 420, 520 is mounted to enable pivoting of the termination arrangement 420, 520 relative to the base 410, 510, respectively.

The ability to pivot the termination arrangements 420, 520 allows adjacent termination arrangements 420, 520 to be pivoted away from a selected termination arrangement 420, 520 to enhance connector access or optical adapter port access at the selected termination arrangement 420, 520.

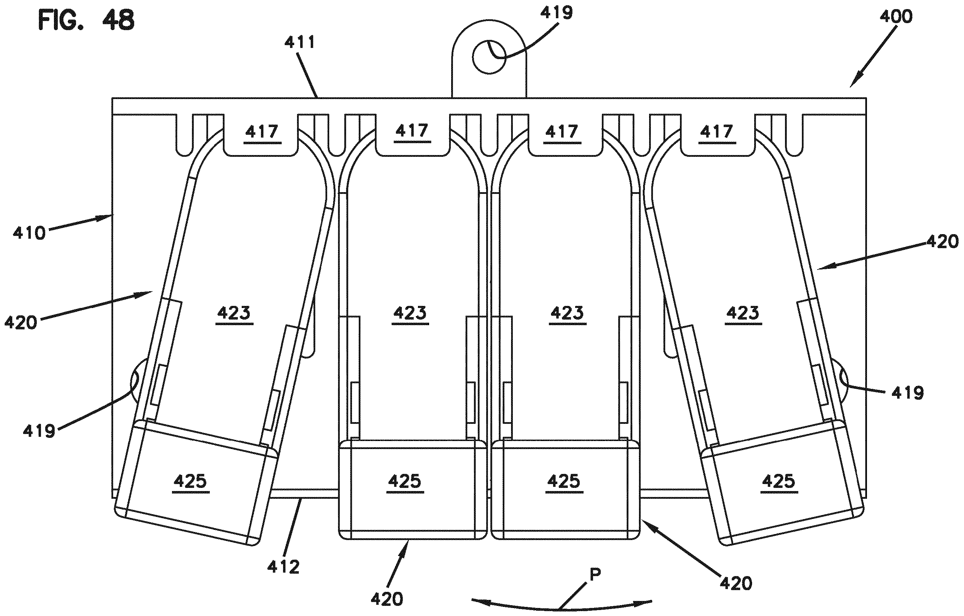

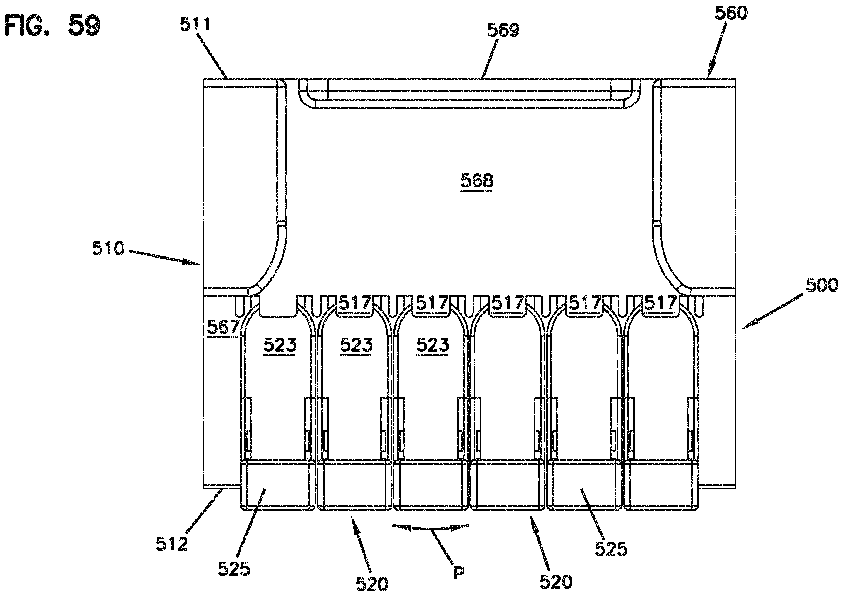

Each termination arrangement 420, 520 extends between opposite first and second ends 421, 422 and 521, 522, respectively. The first ends 421, 521 of the termination arrangements 420, 520 are coupled to the base 410, 510 to enable the second ends 422, 522 to pivot along respective pivot paths P (FIGS. 48 and 59). Each termination arrangement 420, 520 includes an adapter holder 425, 525 at the second end 422, 522, respectively. Each adapter holder 425, 525 is configured to receive and hold at least one optical adapter 450, 550. In certain implementations, the adapter holder 425, 525 may receive and hold multiple optical adapters 450, 550 (e.g., two, three, four, six, eight, ten, twelve, sixteen, etc.).

In some implementations, the pivot path P of each termination arrangement 420, 520 is restricted. In certain examples, the pivot path P is limited to a range of at least 1° and no more than 60°. In certain example, the pivot path P is limited to a range of at least 1° and no more than 45°. In certain example, the pivot path P is limited to a range of at least 2° and no more than 30°. In certain example, the pivot path P is limited to a range of no more than 20°. In certain example, the pivot path P is limited to a range of no more than 15°. In certain example, the pivot path P is limited to a range of about 5° to about 15°.

In certain implementations, the second ends 422, 522 of the termination arrangements 420, 520 each define a slot 428, 528 into which an edge 412, 512 of the base 410, 510 extends, respectively. The interaction between the edge 412, 512 of the base 410, 510 and the respective slot 428, 528 limits the pivot path of each termination arrangement 420, 520, respectively. For example, the termination arrangements 420, 520 are disposed relative to the base 410, 510 so that the edge 412, 512 of the base 410, 510 extends into the slot 428, 528 without hitting a back wall of the slot 428, 528 when the termination arrangement 420, 520 is in a non-pivoted position. The termination arrangement 420, 520 can be pivoted either left or right along the pivot path P. As the termination arrangement 420, 520 pivots to the left, the left side of the back wall of the slot 428, 528 approaches and eventually contacts the edge 412, 512 of the base 410, 510, thereby inhibiting further pivoting of the termination arrangement 420, 520. As the termination arrangement 420, 520 pivots to the right, the right side of the back wall of the slot 428, 528 approaches and eventually contacts the edge 412, 512 of the base 410, 510, thereby inhibiting further pivoting of the termination arrangement 420, 520.

In certain implementations, each termination arrangement 420, 520 includes a retention flange 429, 529 that extends along an underside 414, 514 of the base 410, 510 when a majority of the termination arrangement is disposed over a top surface 413, 513 of the base 410, 510, respectively. The retention flange 429, 529 cooperates with a remainder of the termination arrangement 420, 520 to define the slot 428, 528.

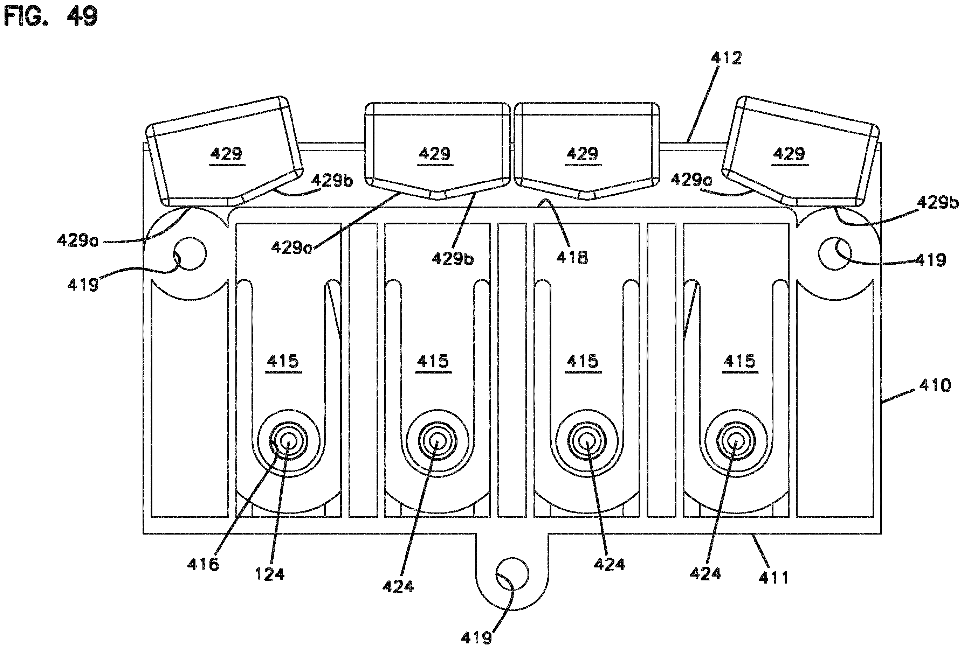

In certain implementations, the retention flange 429, 529 defines first and second angled surfaces 429a, 429b and 529a, 529b facing towards an opposite edge 411, 511 of the base 410, 510, respectively. In certain examples, the underside of the base 410, 510 includes a stopper wall 418, 518. As shown in FIG. 49, interaction between the angled surfaces 429a, 429b and 529a, 529b and the stopper wall 418, 518 limits the pivot path P of the termination arrangement 420, 520, respectively. For example, the termination arrangement 420, 520 can pivot in a first direction along the pivot path P until the first angled surface 429a, 529a abuts the stopper wall 418, 518 or other structure at the underside 414, 514 of the base 410, 510, respectively. The termination arrangement 420, 520 can pivot in an opposite second direction along the pivot path P until the second angled surface 429b, 529b abuts the stopper wall 418, 518 or other structure at the underside 414, 514 of the base 410, 510, respectively.

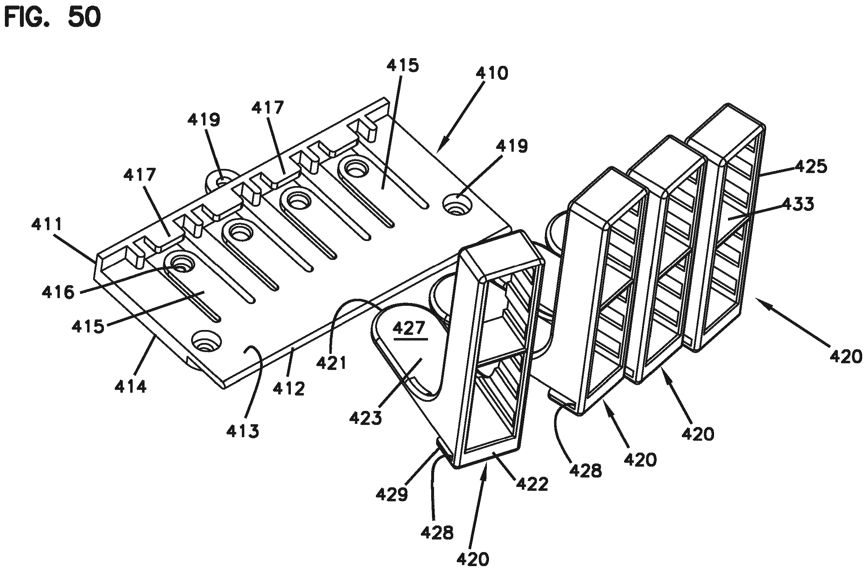

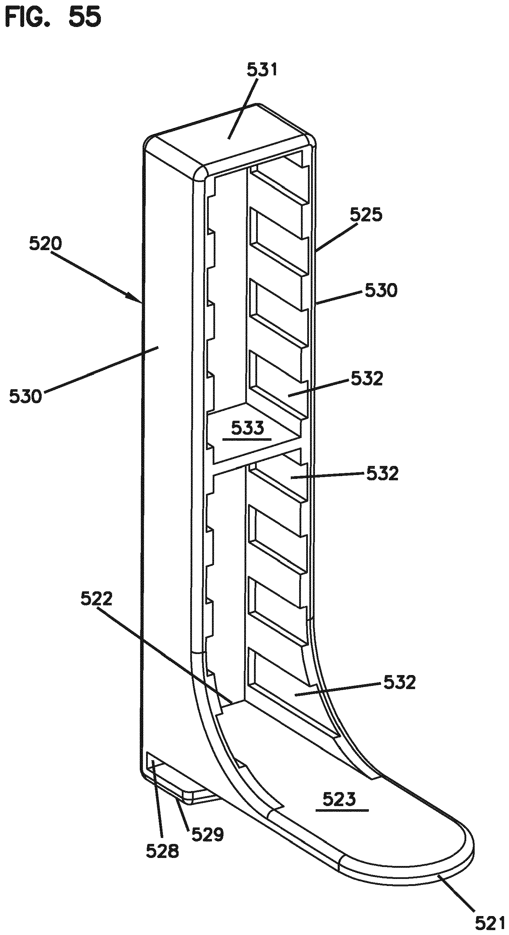

As shown in FIGS. 50 and 55, each termination arrangement 420, 520 includes a support member 423, 523 extending between the first and second ends 421, 422 and 521, 522 of the termination arrangement 420, 520, respectively. The support member 423, 523 has a first major (e.g., bottom) surface 426, 526 and a second major (e.g., top) surface 427, 527. The first major surface 426, 526 faces the base 410, 510 when the termination arrangement 420, 520 is mounted to the base 410, 510.

An adapter holder 425, 525 is carried by the support member 423, 523, respectively. In certain examples, the adapter holder 425, 525 is carried at the second end 422 of the support member 423, 523. Each optical adapter 450, 550 received at the adapter holder 425, 525 defines oppositely facing ports having connector insertion axes that are parallel to the respective support member 423, 523.

In certain implementations, the adapter holder 425, 525 is disposed at the second major surface 427, 527 of the support member 423, 523, respectively. In examples, the adapter holder 425, 525 extends upwardly from the second major surface 427, 527 of the support member 423, 523. In examples, the adapter holder 425, 525 is monolithically formed (e.g., via injection molding) with the support member 423, 523.

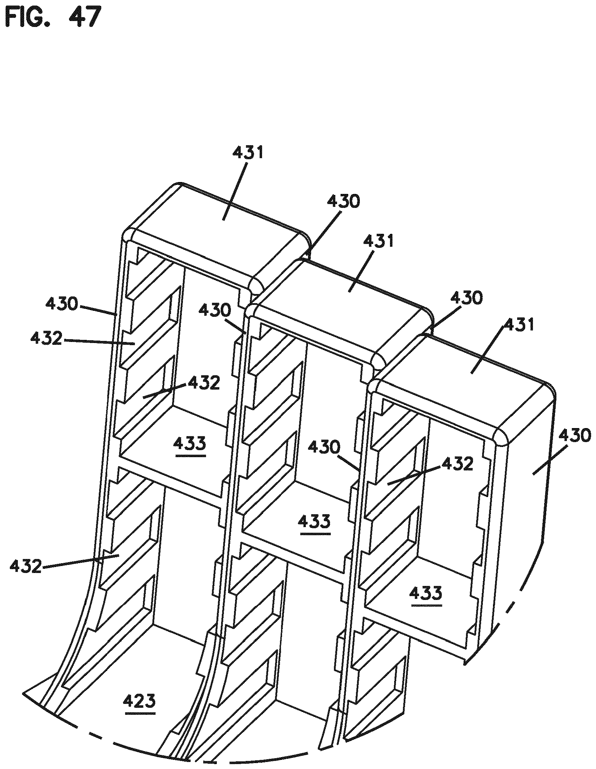

In certain implementations, the adapter holder 425, 525 includes opposing sidewalls 430, 530 that extend upwardly from the support member 423, 523 to a connecting top wall 431, 531, respectively. The sidewalls 430, 530 define slots, openings, or other receiving structures 432, 532 to accommodate the one or more optical adapters 450, 550. In the example shown in FIGS. 47 and 55, the sidewalls 430, 530 define one or more lateral pairs of channels 432, 532 along which flanges of the optical adapters 450, 550, respectively, can slide. In examples, each channel 432, 532 has one open end.

In some implementations, the adapter holder 425, 525 is configured to hold multiple optical adapters 450, 550 in a stack (i.e., one on top of the other). In the example shown in FIG. 44, each adapter holder 425 can hold up to six optical adapters 450, 550. In the example shown in FIG. 52, each adapter holder 525 can hold up to eight optical adapters 450, 550. In other examples, however, each adapter holder 425, 525 can hold up to about two, three, four, ten, twelve, sixteen, or any other desired number of optical adapters 450, 550.

In some implementations, the optical adapters 450, 550 can be separately mounted at the adapter holder 425, 525, respectively. In other implementations, however, the optical adapters 425, 525 can be mounted in one or more groups. For example, two or more optical adapters 450, 550 can be connected together in blocks and the blocks mounted at the adapter holder 425, 525. In other examples, the optical adapters 450, 550 can be molded as a single unit with multiple ports.

In certain examples, in which the adapter holder 425, 525 holds a plurality of optical adapters 450, 550, a bridge 433, 533 extends between the sidewalls 430, 530, respectively, to enhance rigidity. The bridge 433, 533 separates the optical adapters 450, 550 held at the adapter holder 425, 525 into first and second groups. In certain examples, additional bridges 433, 533 can be provided at the adapter holder 425, 525. For example, a bridge 433, 533 may be provided for each optical adapter 450, 550.

In certain implementations, the first end 421, 521 of the support member 423, 523 includes a pin 424, 524, hole, or other mounting structure. In the example shown, the pin 424, 524 or other mounting structure is located at an underside of the support member 423, 523 (i.e., at an opposite side of the support member 423, 523 from the adapter holder 425, 525).

By situating the pin 424, 524 at the first end 421, 521 of the support member 423, 523, the pivot axis of the termination arrangement 420, 520 is spaced from the adapter holder 425, 525. Accordingly, the adapters 450, 550 (and any optical connectors received thereat) also are spaced from the pivot axis. Spacing the adapters 450, 550 from the pivot axis increases the distance over which a selected termination arrangement 420, 520 can be spaced from adjacent termination arrangements 420, 520. Spacing the adapters 450, 550 from the pivot axis also decreases strain on cables routed across the base 410, 510 to reach adapter ports facing towards the first end 411, 511 of the base 410, 510. Sufficient cable extends between the pivot axis and the adapter port to accommodate the rotational deflection of the port.

In certain implementations, the base 410, 510 defines pivot holes 416, 516, pins, or other mounting structure configured to mate with the pin 424, 524, hole, or other mounting structure of the support member 423, 523. In the example shown, the pin 424, 524 of the support member 423, 523 fits within the hole 416, 516 and rotates relative thereto to enable pivoting of the termination arrangement 420, 520.

In certain implementations, the base 410, 510 includes flexible fingers 415, 515 that define the holes 416, 516, respectively. For example, each flexible finger 415, 515 may define one hole 416, 516. Each finger 415, 515 is cantilevered so that a distal end can deflect upwardly and/or downwardly relative to a mounting surface of the base 410, 510. In examples, the holes 416, 516 are disposed at the distal ends of the fingers 415, 515.

In certain implementations, the base 410, 510 includes overhang members 417, 517 disposed above and parallel to the mounting surface of the base 410, 510, respectively. Each overhang member 417, 517 aligns with a respective one of the fingers 415, 515. The overhang members 417, 517 being disposed adjacent the distal ends of the fingers 415, 515 to define a gap therebetween. When the termination arrangements 420 are mounted at the base 410, 510, the first ends 421, 521 of the support members 423, 523 extend beneath the overhang members 417, 517.

The overhang members 417, 517 may inhibit accidental removal of the pins 424, 524 of the support members 423, 523 from the holes 416, 516 of the base 410, 510, respectively. For example, when a termination arrangement 420, 520 is mounted to the base 410, 510, the first end 421, 521 of the support member 423, 523 is slit over the respective finger 415, 515, thereby deflecting the finger 415, 515 downwardly. The first end 421, 521 of the support member 423, 523 slips beneath the overhang member 417, 517. The pin 424, 524 of the support member 423, 523 slides into the hole 416, 516, thereby allowing the finger 415, 515 to return to the undeflected position. The hole 416, 516 inhibits axial movement of the support member 423, 523 relative to the base 410, 510. The overhang member 417, 517 inhibits vertical movement of the support member 423, 523 relative to the base 410, 510. Accordingly, the overhang member 417, 517 inhibits the pin 424, 524 from being removed from the hole 416, 516, respectively.

To purposefully remove the pin 424, 524 from the hole 416, 516, the finger 415, 515 can be deflected downwardly relative to the mounting surface of the base 410, 510. This deflection provides sufficient space between the distal end of the finger 415, 515 and the overhang member 417, 517 to accommodate the pin 424, 524 and the first end 421, 521 of the support member 423, 523 therebetween.

In some implementations, the holes 416 are disposed at or adjacent the end 411 of the base 410 opposite the edge 412 (e.g., see FIG. 44). In other implementations, the holes 516 are disposed at an intermediate location between the end 511 and the edge 512 (e.g., see FIG. 52). In examples, a majority of each termination arrangement 420, 520 overlays the base 410, 510 when the termination arrangements 420, 520 are mounted to the base 410, 510, respectively. For example, the first major surface 426, 526 of each support member 423, 523 may skim over the base 410, 510 as the termination arrangement 420, 520 pivots relative to the base 410, 510. In certain implementations, at least a majority of the adapter holders 425, 525 are disposed over the base 410, 510 when the termination arrangements 420, 520 are mounted to the base 410, 510 throughout the pivot path P. In certain examples, the optical adapters 450, 550 may extend past the edge 412, 512 of the base 410, 510.

In certain implementations, the base 410, 510 defines one or more mounting holes 419, 519 through which one or more fasteners can extend to secure the base 410, 510 to a surface (e.g., a wall, a panel, or other structure. In certain examples, the base 410, 510 can be mounted horizontally so that the fingers 415, 515 deflect upwardly and downwardly. In certain examples, the base 410, 510 can be mounted vertically so that the fingers 415, 515 deflect side-to-side.

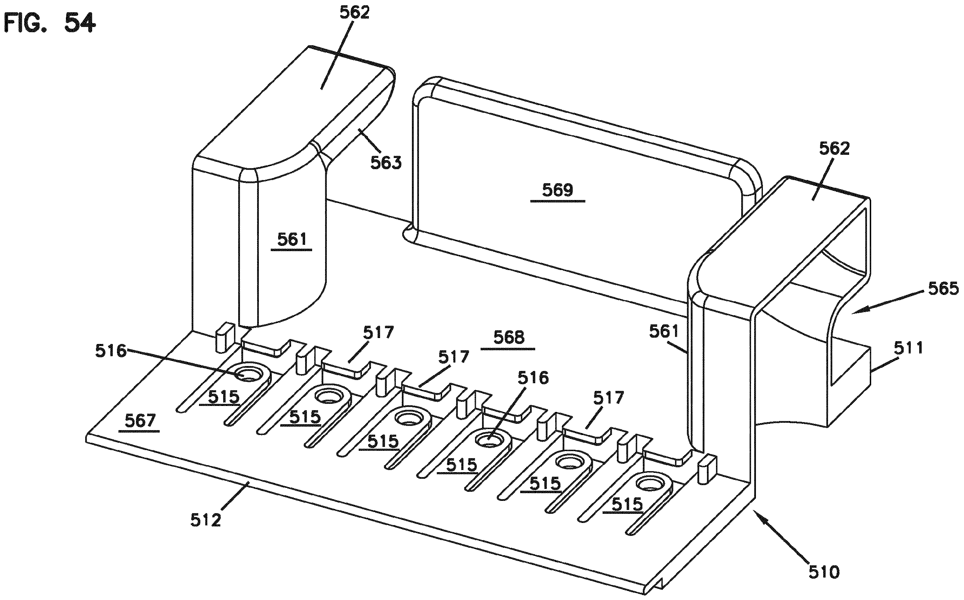

In certain implementations, the base 510 includes a fiber management arrangement 560 including bend radius limiters 561 located at a first end 511 of the base 510 (see FIGS. 52 and 54). The fiber management arrangement 560 defines one or more fiber channels 565 leading on and off the base 510. The bend radius limiters 561 at least partially define the fiber channels 565. In certain examples, retention tabs 562 extend laterally outwardly from the bend radius limiters 561 to retain one or more cables within the channels 565. In certain examples, bottom surfaces of the retention tabs 562, which face the base 510, also define bend radius limiters 563.

In certain implementations, the base 510 includes a rear wall 569 that extends upwardly from the first end 511 of the base 510. In certain examples, the rear wall 569 cooperates with the bend radius limiters 561 to define the channels 565. In the example shown, the rear wall 569 cooperates with a first bend radius limiter 561 at a first side of the base to form a first channel 565 and cooperates with a second bend radius limiter 561 at a second side of the base to form a second channel 565.

In certain implementations, the top surface 513 of the base 510 is stepped to define a first platform 567 and a second platform 568. The flexible fingers 515 are disposed at the first platform 567. The fiber management region 560 is disposed at the second platform 568. In an example, the overhang members 517 extend outwardly from the second platform 568.

### Cable Management Assemblies

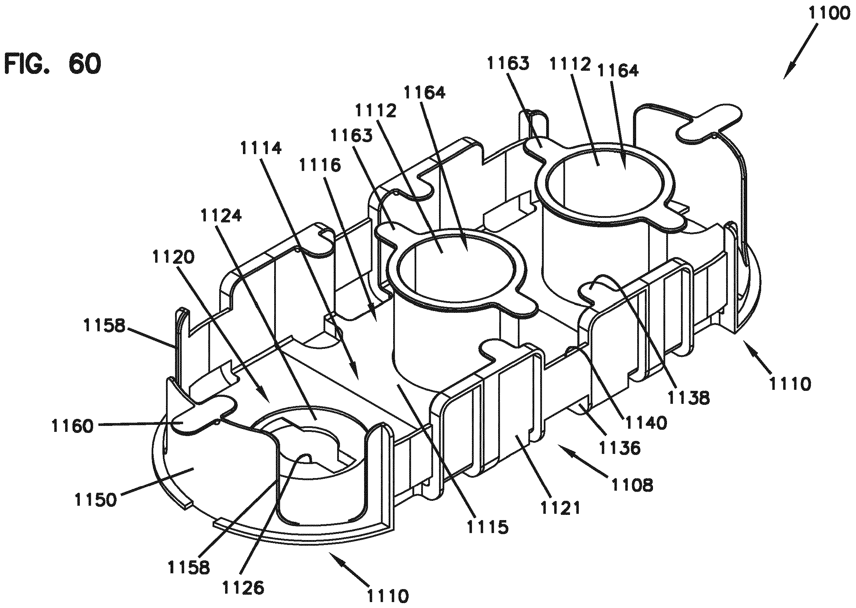

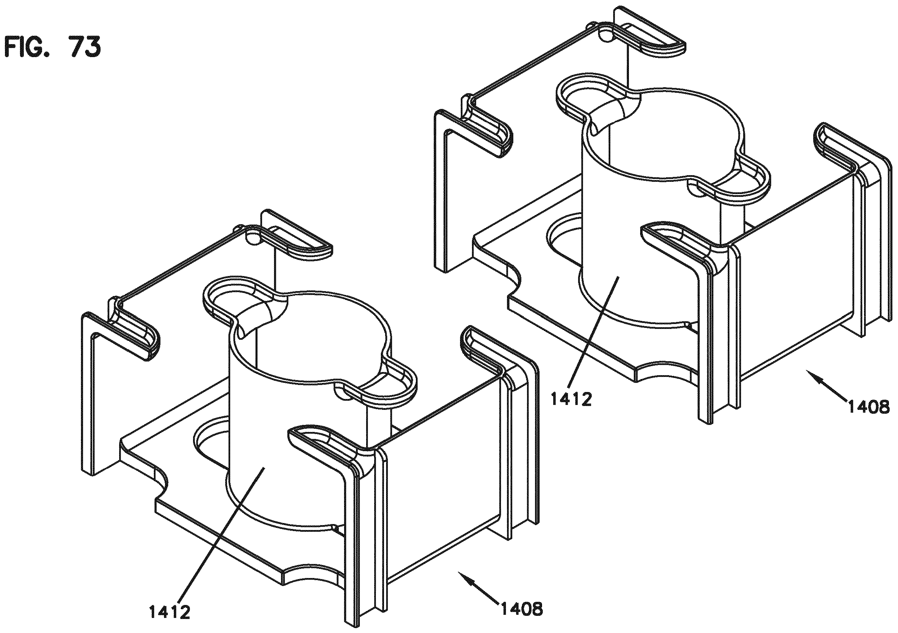

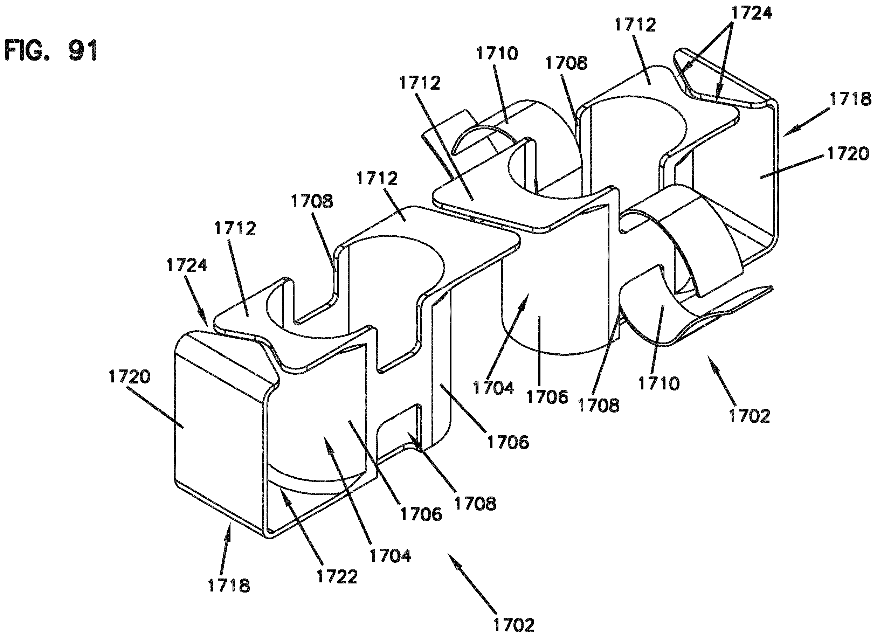

Referring to FIGS. 60-91, various examples of cable management assemblies suitable for use with any of the enclosures of FIGS. 1-8 are illustrated.

The modular cable management system is configured for use in a variety of different telecommunications enclosures and on panels. For example, the modular cable management system can be mounted inside a telecommunications enclosure with other telecommunications components. The modular cable management systems disclosed herein can be configured to store over length cabling associated with the other telecommunications components (e.g., splice trays).

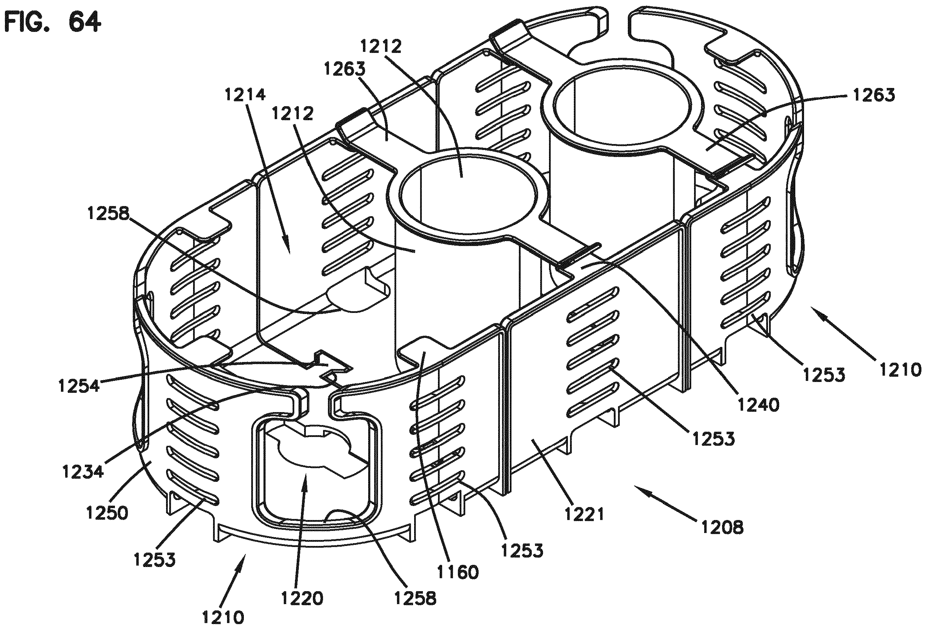

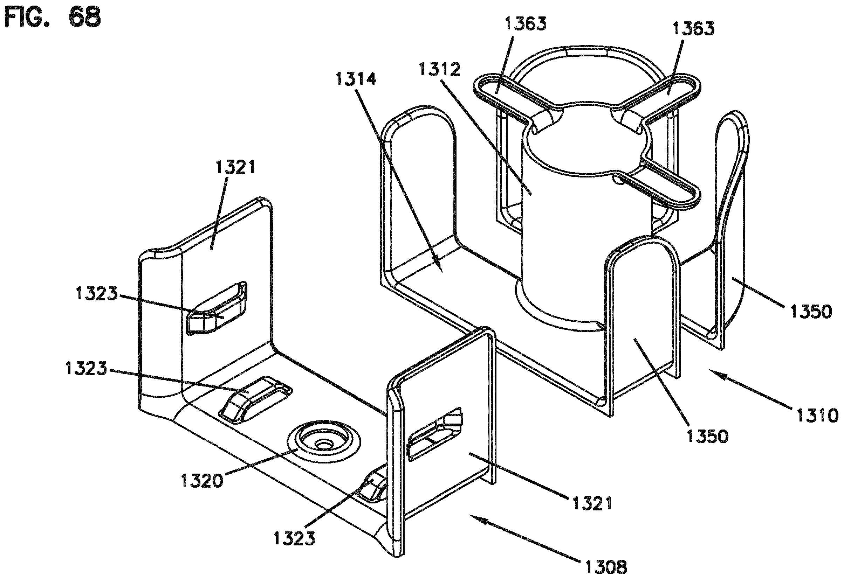

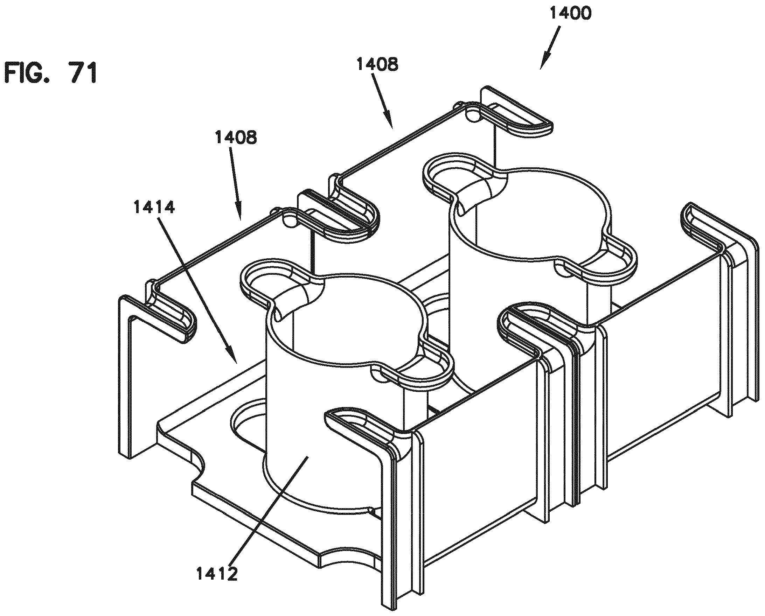

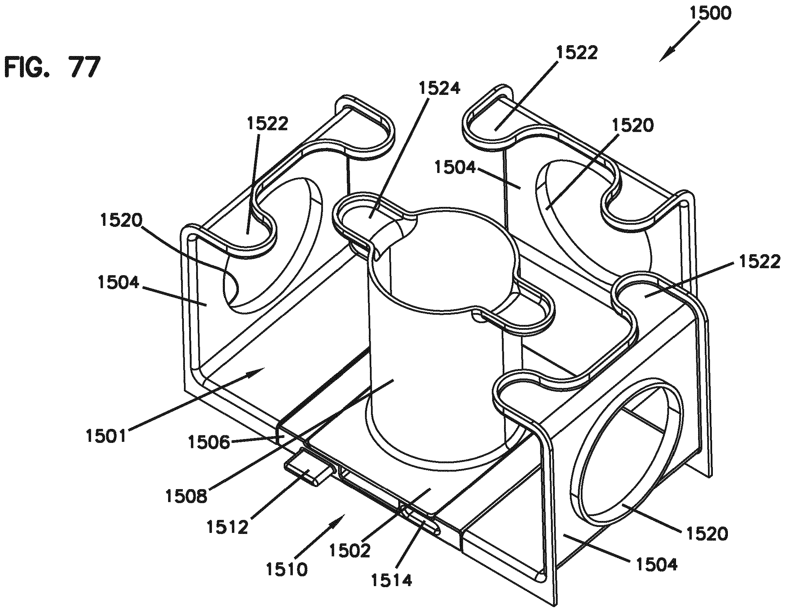

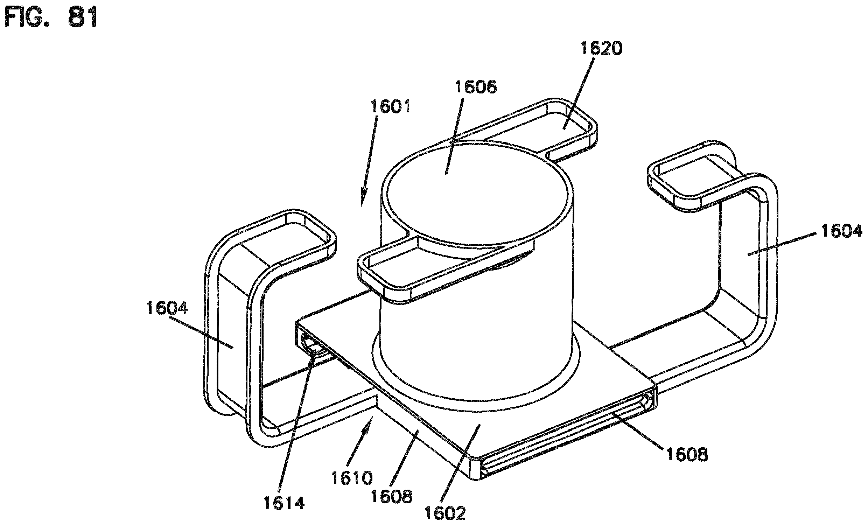

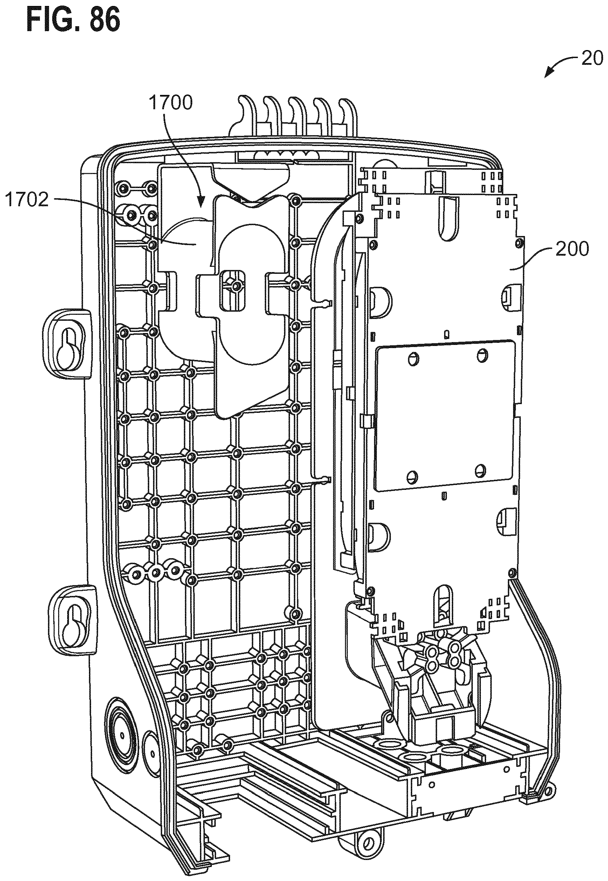

FIGS. 60-63 illustrate a first example of a cable management system 1100; FIGS. 64-67(A-E) illustrate a second example of a cable management system 1200; FIGS. 68-70 illustrate a third example of a cable management system 1300; FIGS. 71-76 illustrate a fourth example of a cable management system 1400; FIGS. 77-80 illustrate a fifth example of a cable management system 1500; FIGS. 81-85 illustrate a sixth example of a cable management system 1600; and FIGS. 86-91 illustrate a seventh example of a cable management system 1700.

FIG. 60 shows the cable management system 1100 positioned within an enclosure 20 along with other telecommunications equipment 104. FIGS. 4-6 show the cable management system 1100 positioned within an example enclosure 20 along with other telecommunications equipment 1104. The telecommunications equipment 1104 can be a variety of different types of telecommunications equipment. Examples of the telecommunications equipment 1104 can include, but are not limited to, spice trays, splitters, fan-out devices, and patch panels.

The cable management system 1100 is configured to aid in managing cabling associated with the telecommunications equipment 1104. For example, as shown in FIG. 5, cabling 1106 can be routed around the interior of the enclosure 20, in communication with both the telecommunications equipment 1104 and the cable management system 1100. The cable management system 1100 is configured to organize, group, and secure excess cabling. The cable management system 1100 allows more space to be used efficiently within the enclosure 20. Further the cable management system 1100 aids in easing installation and maintenance of the telecommunications equipment 1104 and enclosure 20.

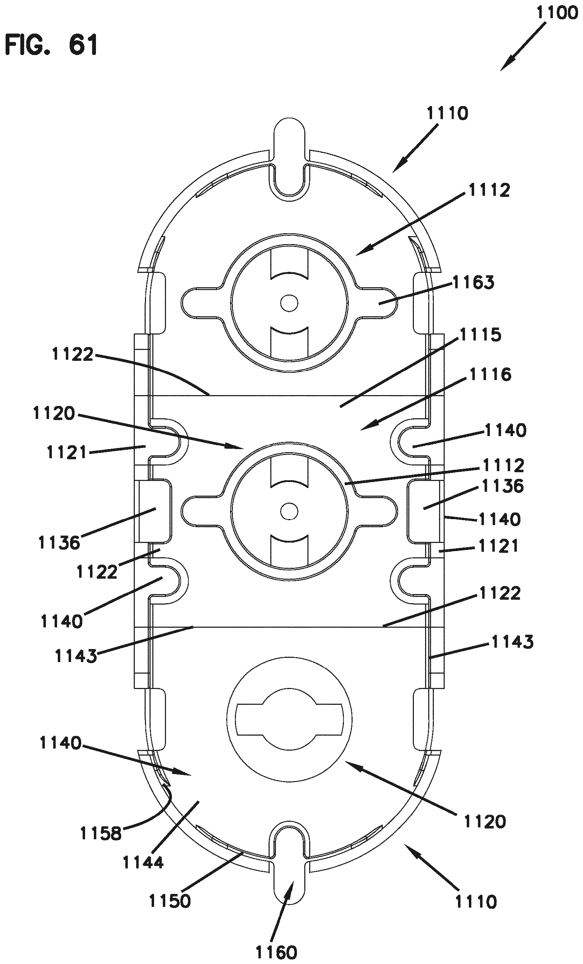

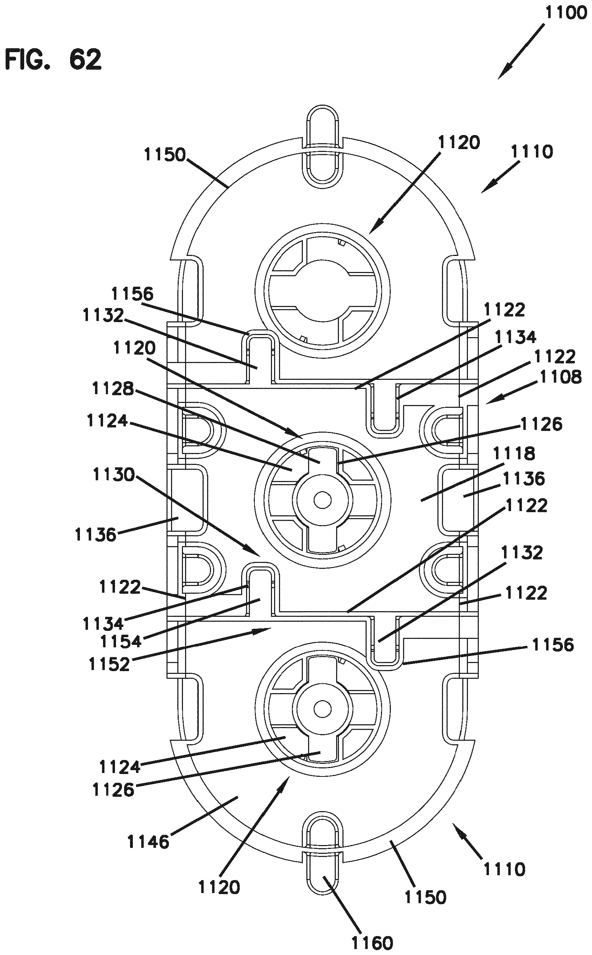

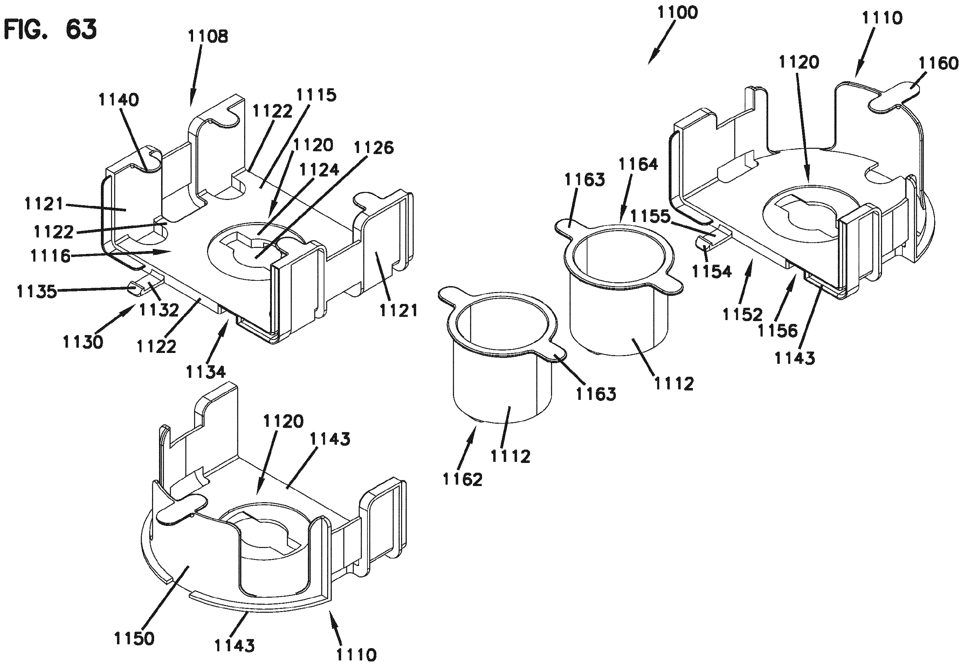

FIG. 60 shows an isometric view of the cable management system 1100 assembled. FIG. 61 shows a top view of the cable management system 1100 assembled, and FIG. 62 shows a bottom view of the cable management system 1100 assembled. FIG. 63 shows an exploded view of the cable management system 1100.

As depicted, the cable management system 1100 includes a body section 1108 and a pair of end sections 1110. Further, the cable management system 1100 includes at least one cable management device 1112 that is attachable to the body section 1108 and end sections 1110. In some examples, the cable management system 1100 is modular and can include a plurality of body sections 1108 and a plurality of end sections 1110. The system 1100 depicted in FIG. 62 is meant to be an example system only. It is considered within the scope of the present disclosure that the cable management system 1100 can have a variety of different configurations, including, but not limited to, systems with a plurality of body sections, a plurality of end sections, and a plurality of cable management devices. Further, the system can include other features described herein.

The body section 1108 and end sections 1110 are mated with one another. In some examples, the sections 1108, 1110 can be connected and secured with one another. The sections 1108, 1110 form a storage area 1114 where cabling can be stored. In some examples, the storage area 1114 is enclosed by the body section 1108 and end sections 1110. In other examples, the storage area 1114 is semi-enclosed by the body section 1108 and end sections 1110.

To customize the storage area 1114, the cable management devices 1112 can be mounted with any number of the body sections 1108 and/or end sections 1110. The cable management devices 1112 allow cabling to be wrapped, either fully or partially, around the device 1112 for organized storage.

The body section 1108 includes a base 1116 defining a top face 1115 and a bottom face 1118. The base 1116 further defines a cable management device mounting feature 1120. The body section 1108 also includes a pair of walls 1121.

The base 1116 includes a plurality of sides 1122. In the depicted example, the base 1116 includes four sides 1122; however, the base 1116 can include any number of sides 1122.

The cable management device mounting feature 1120 is defined by the base 1116 and is configured to receive the cable management device 1112. In some examples, the cable management device mounting feature 1120 includes a flange 1124 and a slot 1126. Accordingly, the cable management device 1112 can include a projection 1128 that is sized and shaped to fit within the slot 1126. Once within the slot, the cable management device 1112 is rotated so that the projection 1128 is no longer aligned with the slot 1126, thereby engaging the cable management device 1112 with the flange 1124. Once installed, the projection 1128 will be positioned on the bottom face 1118 of the base 1116, as shown in FIG. 4. In some examples, the flange 1124 of the cable management device mounting feature 1120 can be recessed from the top face 1115 and bottom face 1118 so as to aid in stabilizing the cable management device 1112.

The body section 1108 also includes mating features 1130 disposed at the sides 1122 of the base 1116. As shown in FIGS. 61 and 62, each mating feature 1130 can include a projection 1132 and a recess 1134. The projection 1132 of each mating feature 1130 is sized and configured to mate with a recess 1134 of another similar mating feature 1130. The projections 1132 and recesses 1134 can be a variety of different shapes and sizes. In some examples, the projection 1132 is configured to be secured within a recess via a tab 1135 extending from the projection 1132 (as shown in FIG. 63). The tab 1135 is configured to interface with a recess so that the projection 1132 is secured within the recess 1134 in a snap-fit configuration.

The walls 1121 of the body section 1108 extend upwardly from the top face 1115, adjacent the sides 1122. The walls 1121 aid in defining the storage area 1114. In some examples, the walls 1121 can include passageways 1136 to allow cabling to pass therethrough. In some examples, the walls 1121 can be removable from the base 1116 of the body section 1108. In other examples still, the walls 1121 can include tabs 1138 and slots 1140 positioned on a top side thereof. The tabs 1138 and slots 1140 are configured to properly position cabling running over the walls 1121 and also to contain cabling stored in the storage area 1114. For example, as shown in FIGS. 4-6, the cable management system 1100 can be mounted in a variety of different orientations, including in a vertical upright position and the tabs 1138 and slots 1140 aid in organizing the cabling.

The end sections 1110 are similar to the body section 1108; however, the shape of the end sections 1110 differs from the body section 1108. Specifically, the end sections 1110, (like the body section 108) include a base 1142 that defines a top face 1144 and a bottom face 1146. The base 1142 further includes the cable management device mounting feature 1120 for receiving a cable management device 1112 (identical to the mounting feature 1120 on the body section 1108). The end sections 1110 also each include a wall 1150.

The base 1142 of each end section 1110 includes a plurality of sides 1143. In some examples, the base 1142 includes at least one side 1143 that is curved. In the depicted example, the base 1142 also includes at least one side 1143 that includes a mating feature 1152 that is identical to the mating features 1130 described above with respect to the body section 1108. Like the mating feature 1130, the mating feature 1152 of the end section 1110 includes a projection 1154 and a recess 1156. The mating features 1152 of the end sections 1110 are sized and shaped to mate with the mating features 1130 of the body section 1108. In some examples, the projection 1154, like projection 1132, includes a tab 1155 so that the mating features 1130, 1152 can be secured to one another.

The walls 1150 of the end sections 1110 are sized and shaped to partially surround the base 1142. In some examples, the walls 1150 are disposed around the base 1142 of the end sections on all sides 1143 except for the side 1143 that includes the mating feature 1152. In some examples, the walls 1150 are curved so that the walls that follow the curved shape of the sides 1143 of the base 1142. Further, the walls 1150 can include passages 1158 that allow for the routing of cabling outside of the storage area 1114. Further, like the tabs 1138 on the walls 1121 described above on the body section 1108, the walls 1150 can also include tabs 1160 positioned on the topside thereof.

With continued reference to FIGS. 60-62, the cable management device 1112 is configured to attach to either the end sections 1110 or the body section 1108 at the cable management device mounting features 1120. Because each of the end sections 1110 and body section 1108 includes a cable management device mounting feature 1120, the user can selectively choose different mounting locations for a single, or a plurality of, cable management devices 1112 to customize the cable management system 1100.

The cable management device 1112 provides a location for securing cabling. For example, the cable management device 1112 can act as a spool, or a plurality of the cable management devices 1112 can form a spool for cabling storage.

In some examples, the cable management device 1112 has a cylindrical shape with a height that is substantially similar to the height of the walls 1121, 1150. In other examples, the cable management device 1112 can have different shapes.

As described above, the cable management device 1112 can include a projection 1128 at a bottom side 1162 for mounting to cable management device mounting features 1120. In some examples, the cable management device 1112 can also include tabs 1163 at a top side 1164. The tabs 1163 can be used to help retain cabling in the storage area 1114 and on the cable management device 1112.

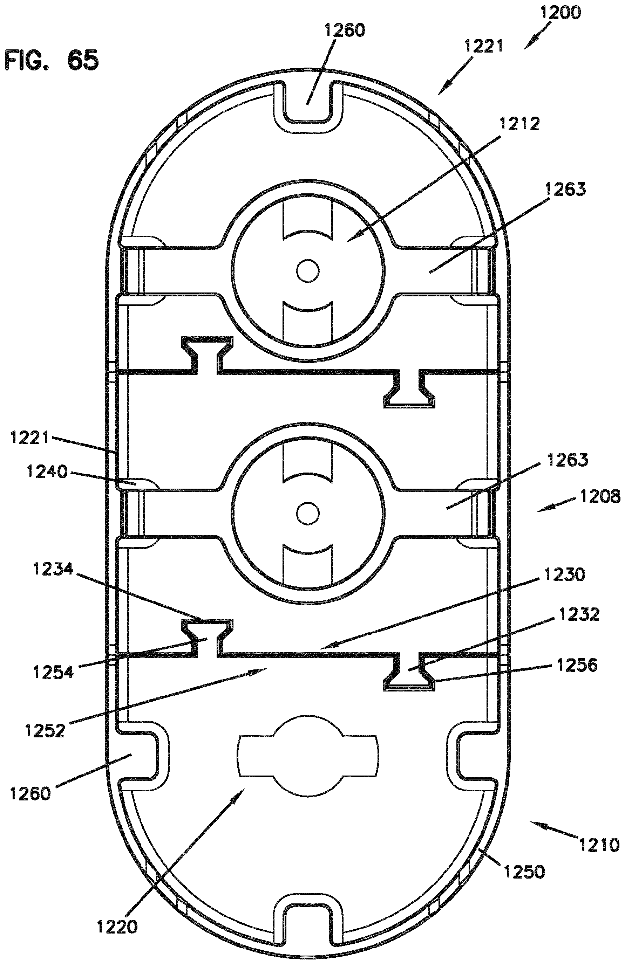

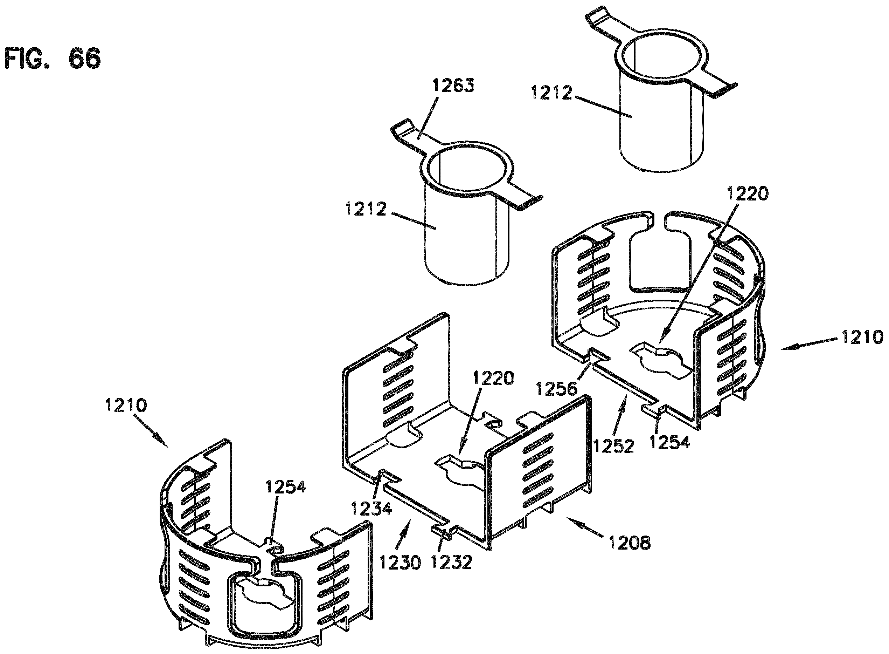

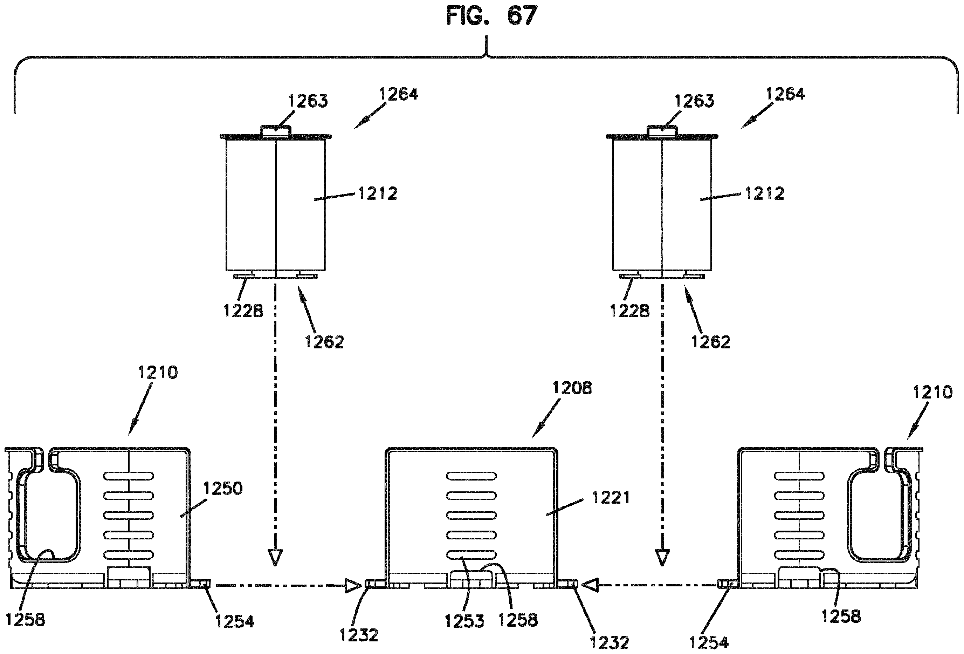

FIG. 64 shows an example of a cable management system 1200, similar to the cable management system 1100 described above. FIG. 65 shows a top view of the cable management system 1200. FIG. 66 shows an isometric exploded view of the cable management system 1200. FIG. 67 shows a side exploded view of the cable management system 1200. The cable management system 1200 includes a body section 1208 and end sections 1210 that are able to be mated with one another. In some examples, the cable management system 1200 is modular and can include a plurality of different configurations. The body section 1208 and end sections 1110 share multiple similar features with the body section 1108 and end sections 1110 described above. Further, the cable management system 1200 also includes cable management devices 1212 that are substantially similar to the cable management devices 1112 described above. The system 1200 depicted in FIGS. 64-67 is meant to be an example system only. It is considered within the scope of the present disclosure that the cable management system 1200 can have a variety of different configurations, including, but not limited to, systems with a varying numbers of body sections 1208, end sections 1210 and cable management devices 1212. Further, the system can include other features described herein.

The body section 1208 and end sections 1210 include mating features 1230, 1252 that each include projections 1232, 1254 and recesses 1234, 1256 that allow the body section 1208 and end sections 1210 to be mated with one another. In some examples, the projections 1232, 1254 and recesses 1234, 1256 have shapes so as to allow the mating features 1230, 1252 to be securely connected to one another. For example, the projections 1232, 1254 and recesses 1234, 1256 can have a puzzle-piece like shape.

The body section 1208 and end sections 1210 can include walls 1221, 1250 that include a plurality of slots 1253. In some examples, the slots 1253 are configured to allow cabling to pass therethrough. In other examples, the slots 1253 are configured to receive cable securing devices (e.g., zip ties, straps, etc.) therethrough. The cable securing devices can aid in organizing the cabling in a storage area 1214. Further, the walls 1221, 1250 can also include additional passages 1258 to allow cabling to pass through.

The body section 1208 and end sections 1210 can also include cable management device mounting features 1220 for receiving and mounting the cable management device 1212. The cable management device mounting features 1220 can be are substantially similar to cable management device mounting features 1120.

The cable management devices 1212 are substantially similar to cable management devices 1112 described above. The cable management devices 1212 include a projection 1228 (as shown in FIG. 67) extending from a bottom face 1262. The cable management devices 1212 also include tabs 1263 that extend away from a top face 1164. In some examples, the tabs 1263 can extend a distance to overlap tabs 1238, 1260 that are disposed on the walls 1221, 1250 of the body section 1208 and end sections 1210. The tabs 1263 of the cable management device 1212 aid to further contain cabling within a storage area 1214. In some examples, the tabs 1263 are configured to overlap the walls 1121, 1150.

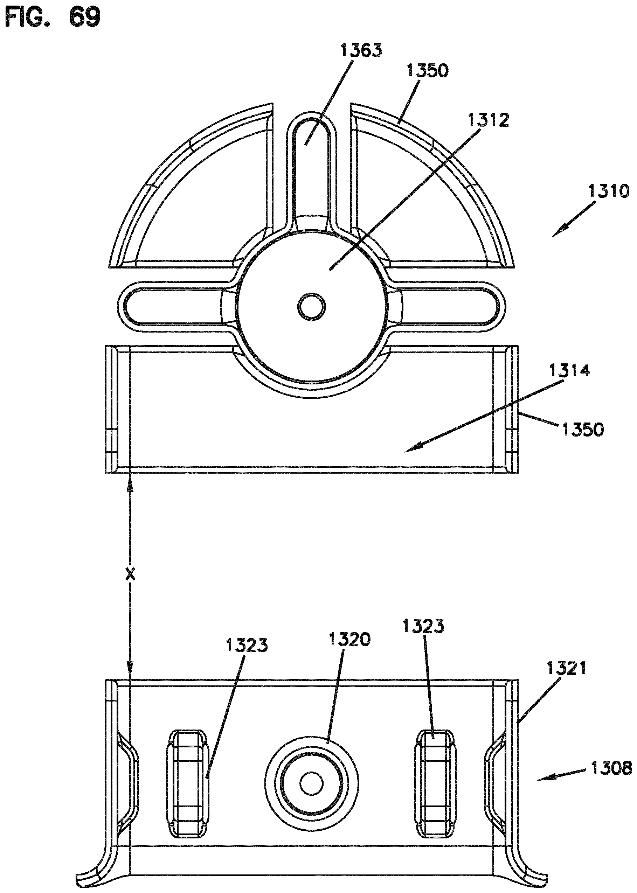

FIG. 68 shows an example of a cable management system 1300, similar to the cable management systems 1100, 1200 described above. FIG. 69 shows a top view of the cable management system 1300. The cable management system 1300 includes a body section 1308 and an end section 1310 that are useable together to form a storage area 1314 having a variety of different configurations. In some examples, the cable management system 1300 is modular. The body section 1308 and end section 1310 share multiple similar features with the body sections 1108, 1208 and end sections 1110, 1210 described above. Further, the cable management system 1300 also includes cable management devices 1312 that are substantially similar to the cable management devices 1112, 1212 described above. The system 1300 depicted in FIGS. 68-69 is meant to be an example system only. It is considered within the scope of the present disclosure that the cable management system 1300 can have a variety of different configurations, including, but not limited to, systems with varying numbers of body sections 1308, end sections 1310 and cable management devices 1312. Further, the system can include other features described herein.

The body section 1308 is configured to be mated and used with the end section 1310. In some examples, the body section 1308 can include mating features, similar to the features 1130, 1152 described above. In other examples, the body section 1308 and end section 1310 can be configured to be positioned immediately adjacent one another.

As shown in FIG. 69, the body section 1308 can be spaced a distance X away from the end section so as to customize the length of the storage area 1314. In some examples, the body section 1308 is touching a portion of the end section 1310. In other examples, the body section 1308 is spaced away from the end section 1310.

The body section 1308 includes a pair of walls 1321 and a base 1316. The body section 1308 also includes a cable management device mounting feature 1320 and a plurality of cable securing device tabs 1323. The cable management device mounting feature 1320 is configured to receive a cable management device 1312. In some examples, the cable management device 1312 is secured to the cable management device mounting feature 1320 via a fastener (not shown). In other examples, the cable management device 1312 is secured to the cable management device mounting feature 1320 using a similar system as the cable management device mounting features 1120, 1220, described above.

The cable securing device tabs 1323 are configured to receive a cable securing device (e.g., a zip tie, strap, etc.). This allows cabling stored within the cable storage area 1314 to be bundled by a cable securing device and then secured to the body section 1308 of the cable management system 1300.

The end section 1310 includes a plurality of segmented walls 1350. However, in other examples, the end section 1310 can include a continuous wall 1350, similar to the walls 1150, 1250 described above. Further, like the body section 1308, the end section 1310 is configured to receive a cable management device 1312.

The cable management device 1312 includes a plurality of tabs 1363, similar to tabs 1163, 1263 above, to aid in retaining cabling within the storage area 1314. In some examples, the tabs 1363 are removable and selectively positionable around the cable management device 1312. In some examples, the cable management device 1312 is configured to be mounted to another surface (e.g., a base of the enclosure 20) and the end section 1310 is configured to surround the mounted cable management device 1312.

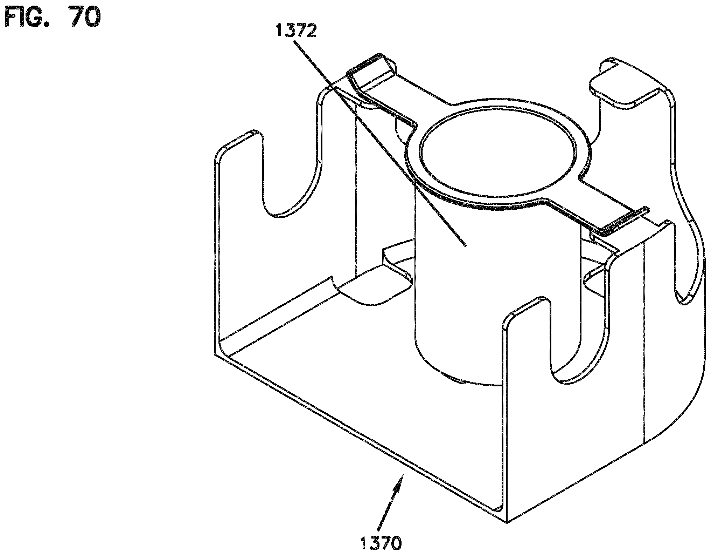

FIG. 70 shows an alternative end section 1370 and cable management device 1372. The end section 1370 is substantially similar to the end sections 1110, 1210, 1310 described above, and the cable management device 1372 is substantially similar to the cable management device 1112, 1212, 1312 described above.

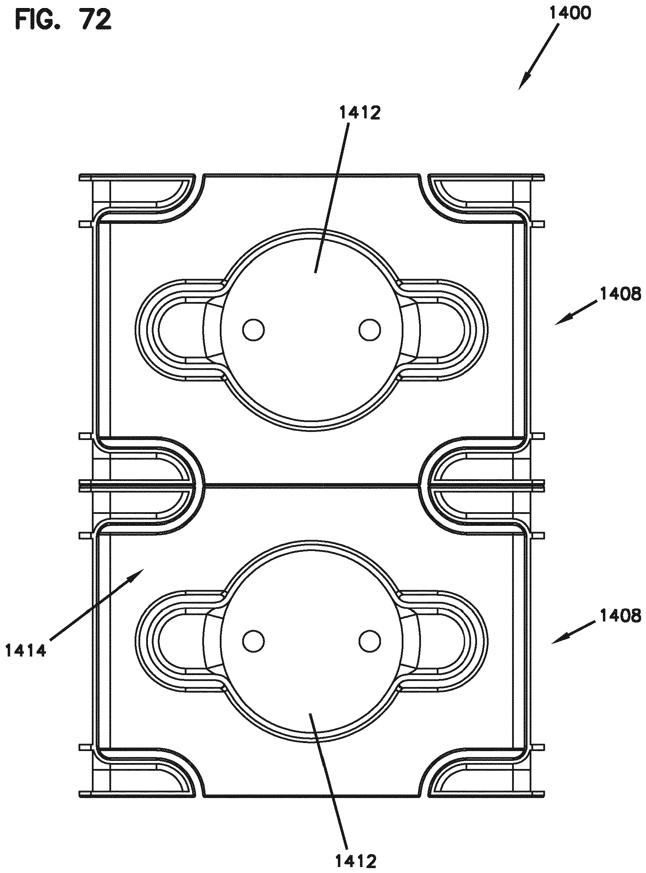

FIG. 71 shows an example of a cable management system 1400, similar to the cable management systems 1100, 1200, 1300 described above. FIG. 72 shows a top view of the cable management system 1400. The cable management system 1400 includes body sections 1408 that are useable together to form a storage area 1414 having a variety of different configurations. In some examples, the cable management system 1400 is modular. The body sections 1408 share multiple similar features with the body sections 1108, 1208, 1308 and end sections 1110, 1210, 1310, 1370 described above. Further, the cable management system 1400 also includes cable management devices 1412 that are substantially similar to the cable management devices 1112, 1212, 1312, 1372 described above. The system 1400 depicted in FIGS. 71-72 is meant to be an example system only. It is considered within the scope of the present disclosure that the cable management system 1400 can have a variety of different configurations, including, but not limited to, systems with varying numbers of body sections 1408 and cable management devices 1412. Further, the system can include other features described herein.

In some examples, the body sections 1408 are configured to be mated and used together. In some examples, the body sections 1408 can including mating features, similar to the features 1130, 1152 described above. In some examples, the body sections 1408 are attached to one another. In other examples, the body sections 1408 are configured to be positioned immediately adjacent one another.

In some examples, the cable management devices 1412 are removably attached to the body sections 1408. In other examples, the cable management devices 1412 integrally formed with the body sections 1408.

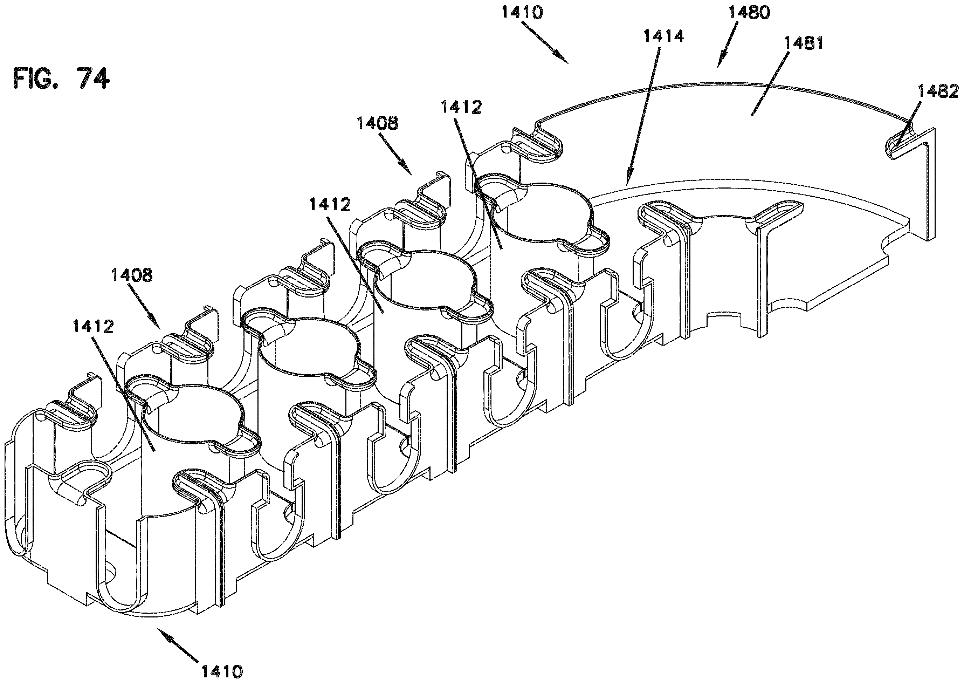

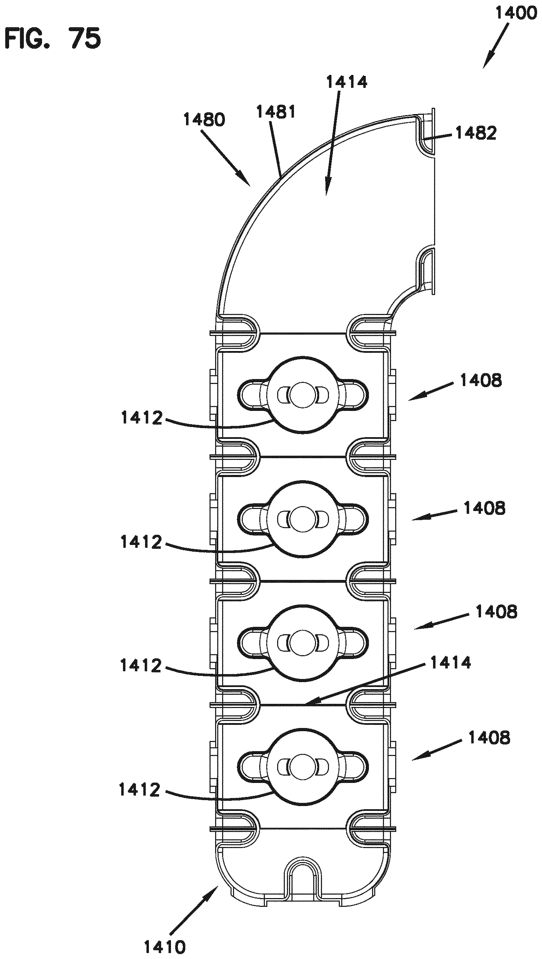

FIG. 74 shows an example of the cable management system 1400 with a plurality of body sections 1408. FIG. 75 shows a top view of the cable management system 1400 that is depicted in FIG. 74. In the depicted example, a plurality of body sections 1408 are mated together to form the storage area 1414. Further, the system 1400 also includes a curved trough section 1480 and an end section 1410.

Cable management devices 1412 are shown mounted to each body section 1408. In some examples, only a select amount of body sections 1408 include cable management device 1412 mounted thereto.

The end section 1410 is similar to the end sections 1110, 1210, 1310, 1370 described above. In the depicted example, the end section 1410 does not include a cable management device mounting feature; however, in other examples, the end section 1410 can include a cable management device mounting feature.

The curved trough section 1480 includes a curved wall 1481 to aid in further defining the cable storage area 1414. In some examples, the curved trough section 1480 helps to define a cable routing path from telecommunications equipment (not shown) to the cable storage area 1414. In some examples, the curved trough section 1480 includes a plurality of tabs 1482 to aid in retaining cabling within the storage area 1414. In some examples, the curved trough section 1480 can include mating features to allow it to be mated with the body sections 1408 or end section 1410.

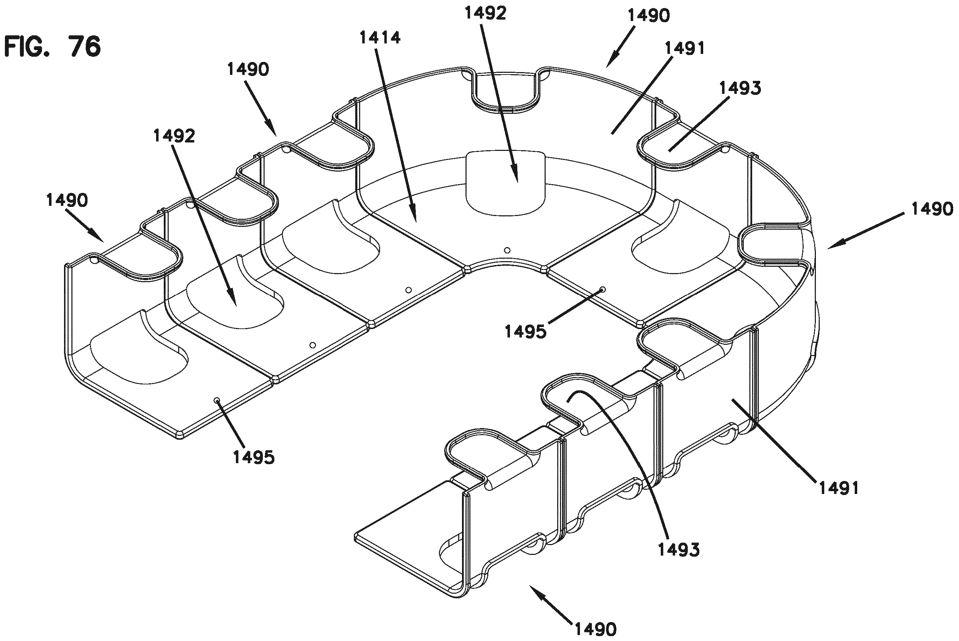

FIG. 76 shows a plurality of trough sections 1490. In some examples, the trough sections 1490 can be used with the body sections 1408, the end section 1110, and the curved trough sections 1480. In some examples, the trough sections 1490 are configured to define cable routing paths and aid in defining the storage areas 1414. The trough sections 1490 can each include mating features, similar to the features 1130, 1152 described above. In some examples, the trough sections 1490 include at least one wall 1491, which can either be straight or curved. In other examples, the trough section 1490 includes a plurality of walls 1491. In other examples still, the walls 1491 can include a passageway 1492 therethrough to facilitate cable routing. The walls 1491 can also include tabs 1493, similar tabs 1138/1238, 1160/1260, 1163/1263/, 1323 described above, to aid in retaining the cabling within the storage area 1414. In some examples, the trough sections 1490 include securing apertures 1495 to allows the trough sections to be secured to a base of an enclosure or to a panel.

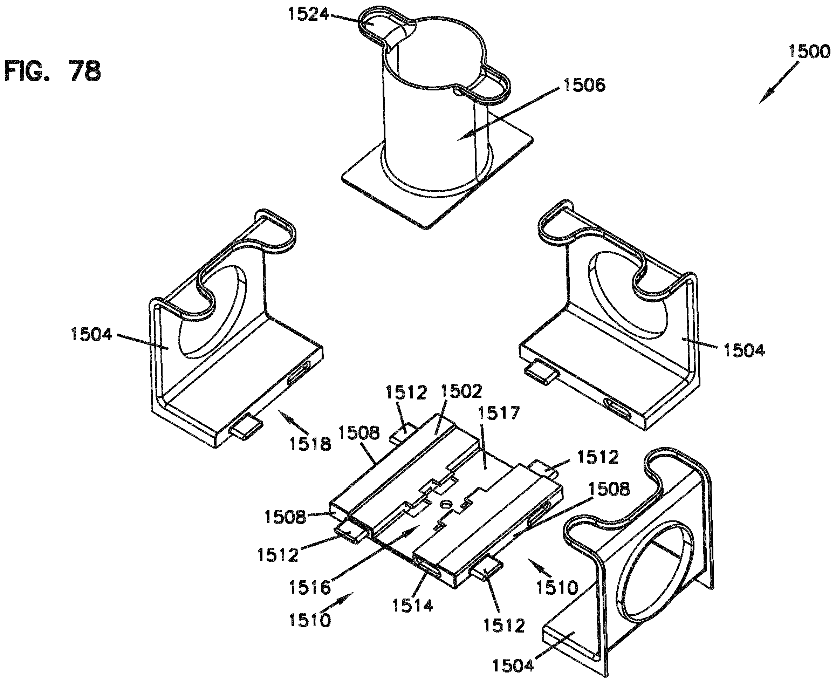

FIG. 77 shows an isometric view of a cable management system 1500 assembled, similar to the cable management systems 1100, 1200, 1300, 1400 described above. FIG. 78 shows an exploded view of the cable management system 1500. The cable management system 1500 includes a base 1502, wall sections 1504, and cable management devices 1506 that are useable together to form a storage area 1501 having a variety of different configurations. In some examples, the cable management system 1500 is modular. The system 1500 depicted in FIG. 77 is meant to be an example system only. It is considered within the scope of the present disclosure that the cable management system 1500 can have a variety of different configurations, including, but not limited to, systems with varying numbers of bases 1502, walls 1504, and cable management devices 1506. Further, the system can include other features described herein.

The base 1502, similar to body sections 1108, 1208, 1308, 1408 described above, includes a plurality of sides 1508 that each include mating features 1510. The mating features 1510 at each side 1508 are configured to receive and mate with other like bases and also wall sections 1504. In some examples, the mating features 1510 include a projection 1512 and a recess 1514 that are configured to mate with other like projections and recesses.

The base 1502 further defines a cable management device mounting feature 1516. In some examples, the cable management device mounting feature 1516 can be substantially similar to the mounting features 1120, 1220, 1320 described above. In other examples, the cable management device mounting feature 1516 includes a channel 1517 that is configured to receive and secure the cable management device 1506.

The walls 1504 are configured to be mated with the base 1502 at any one of its sides 1508. The walls 1504 each include mating features 1518 that are configured to mate with the mating features 1510 of the base 1502. In some examples, the cable management system 1500 can include a plurality of walls 1504 mounted to a single base 1502. In other examples, a single wall or no walls are mounted to a single base 1502. The walls 1504 can also include passages 1520 to allow cables to pass therethrough. Further, the walls 1504 can include tabs 1522 at a top side to help retain the cabling within the storage area 1501.

The cable management device 1506 is substantially similar to the cable management devices 1112, 1212, 1312, 1372, 1412 described above. The cable management device 1506 can be cylindrical and have tabs 1524 to aid in retaining cabling on the cable management device 1506.

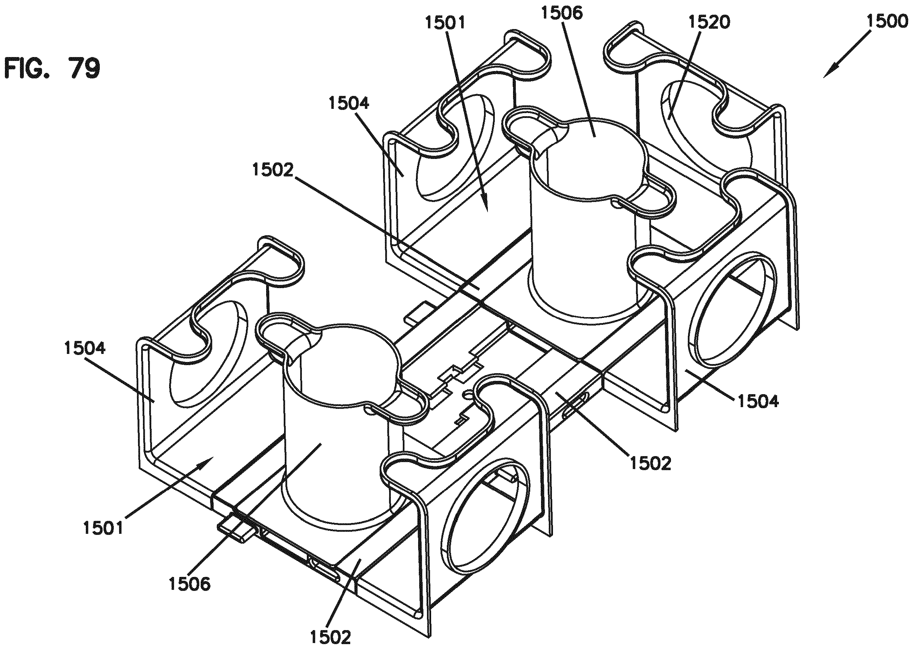

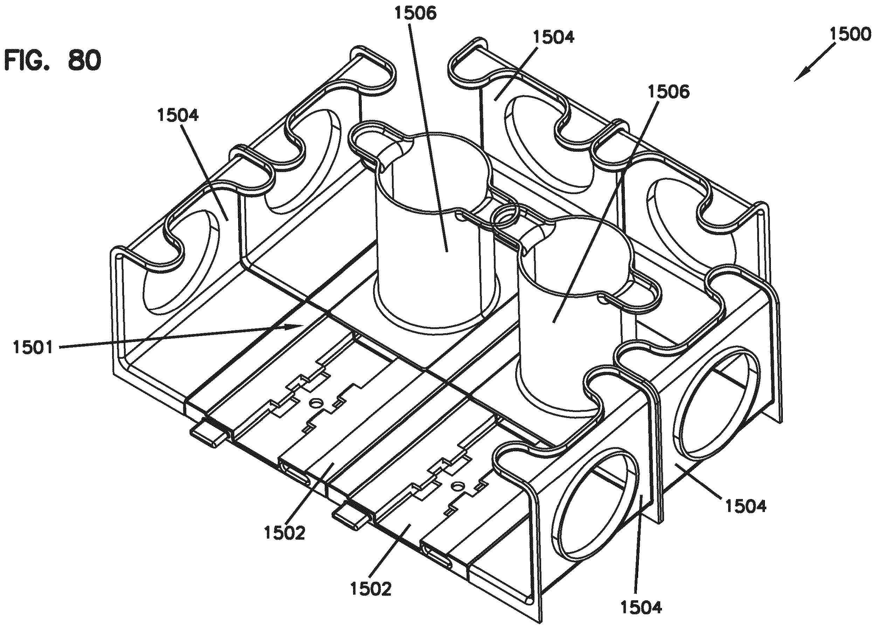

FIGS. 79 and 80 show the cable management system 1500 in example configurations. As shown, a variety of different configurations of differently sized storage areas 1501 can be obtained by using different numbers of bases 1502, walls 1504, and cable management devices 1506.

FIG. 81 shows an isometric view of a cable management system 1600 assembled, similar to the cable management systems 1100, 1200, 1300, 1400, 1500 described above. The cable management system 1600 includes a base 1602, wall sections 1604, and a cable management device 1606 that are useable together to form a storage area 1601 having a variety of different configurations. In some examples, the cable management system 1600 is modular. The system 1600 depicted in FIG. 81 is meant to be an example system only. It is considered within the scope of the present disclosure that the cable management system 1600 can have a variety of different configurations, including, but not limited to, systems with varying numbers of bases 1602, walls 1604, and cable management devices 1606. Further, the system can include other features described herein.

The base 1602 can be integrally formed with the cable management device 1606. The base 1602 can be similar to body sections 1108, 1208, 1308, 1408 described above, and include a plurality of sides 1608. In some examples, the sides 1608 include mating features 1610. The mating features 1610 are configured to receive the walls 1604. In some examples, the mating feature 1610 include at least one recess 1614 that is configured to mate with a portion of the walls 1604.

The walls 1604 are configured to be extendable so that the storage area 1601 can be altered as needed. In some examples, the walls 1604 include an extension 1616 that is configured to be received by the recess 1614 on the base 1602. As needed, the extension 1616 can be slidably moved within the recess 1614 to alter the distance from the wall 1604 to the base 1602, and thereby alter the size of the storage area 1601.

The cable management device 1606 can either be mounted to the base 1602 or integrally formed as a part of it. The cable management device 1606 is substantially similar to the cable management devices 1112, 1212, 1312, 1372, 1412, 1506, 1606 described above. The cable management device 1606 can be cylindrical and can include tabs 1620 at a top side thereof to aid in retaining cabling on the cable management device 1606.

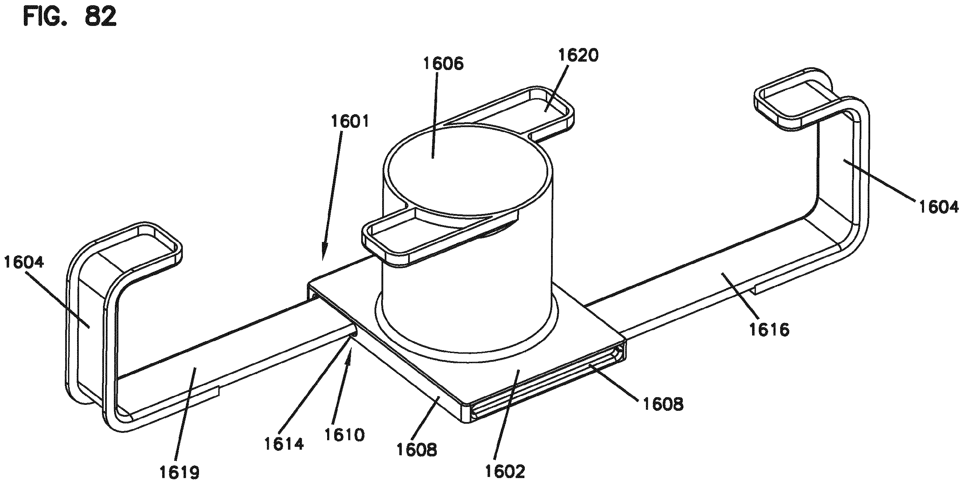

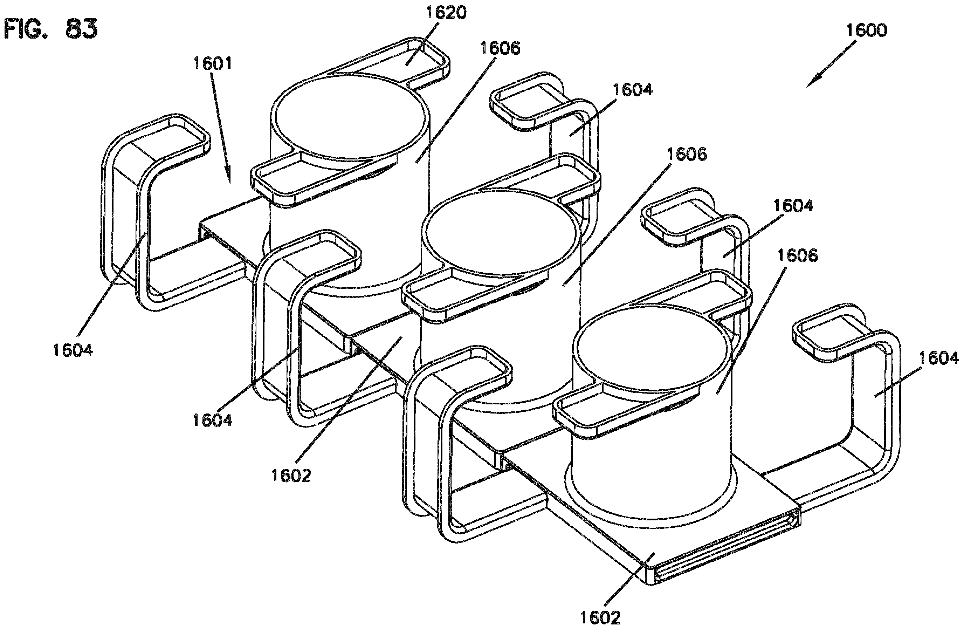

FIG. 82 shows the walls 1604 of the cable management system 1600 in the extended position. In the extended position, the storage area 1601 is expanded. FIG. 83 shows a series of bases 1602, walls 1604, and cable management devices 1606 mated with one another to form the storage area 1601.

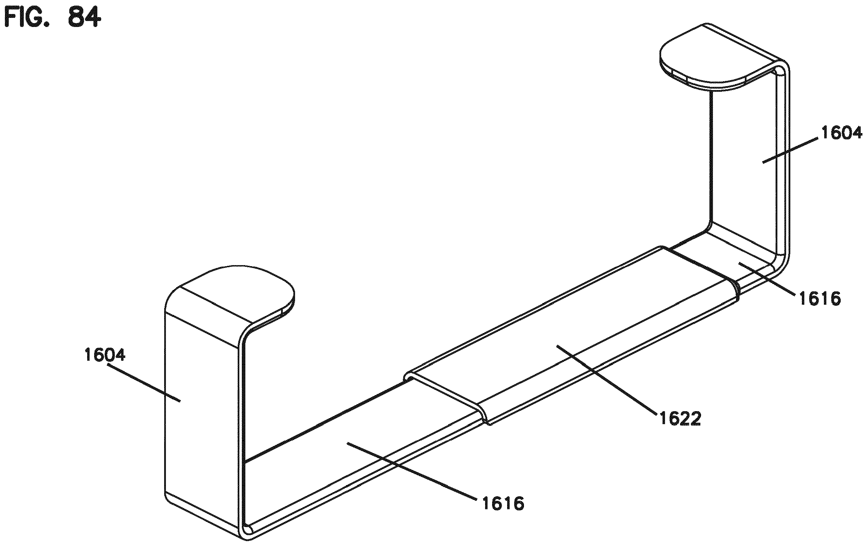

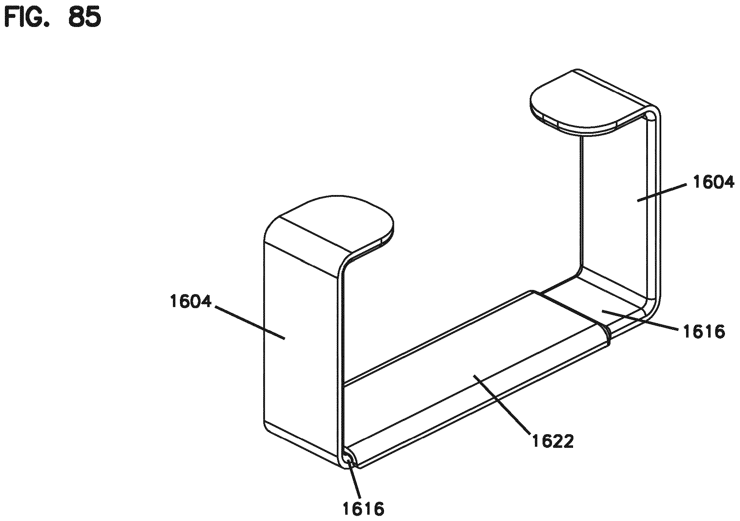

FIGS. 84 and 85 show an example of the extendable walls 1604. The walls 1604 are joined together by a sleeve 1622. The sleeve 1622 captures the extensions 1616 of both walls 1604, thereby allowing the extensions 1616 to either overlap one another within the sleeve 1622 or be attached to one another by the sleeve 1622. FIG. 85 shows the walls 1604 in the non-extended position where the extensions 1616 overlap one another within the sleeve 1622.

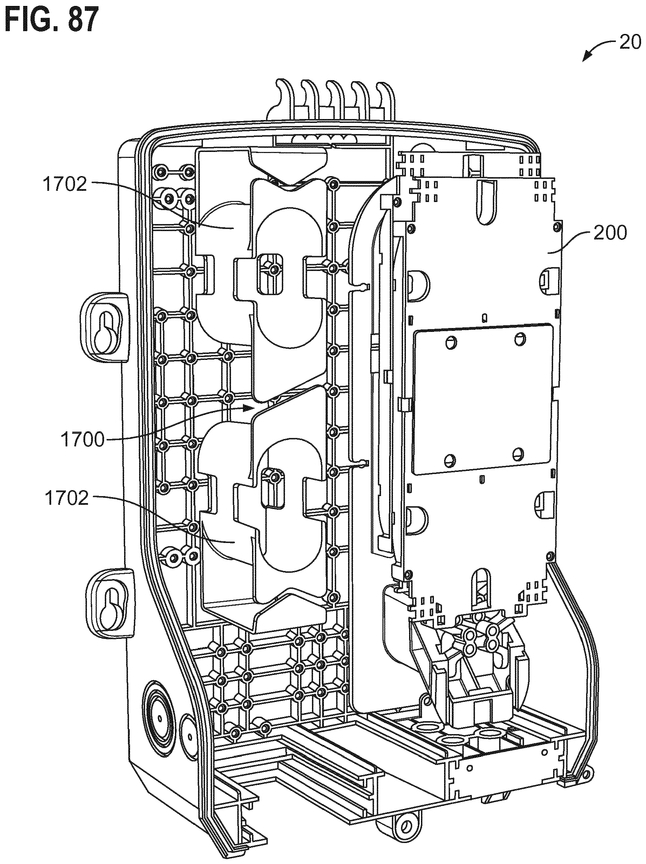

FIG. 86 shows a cable management system 1700 positioned within the enclosure 20 along with the other telecommunications equipment 1104. The system includes a cable management device 1702 that is mountable within the enclosure 20. As shown in FIG. 87, the cable management system 1700 can include a plurality of cable management devices 1702.

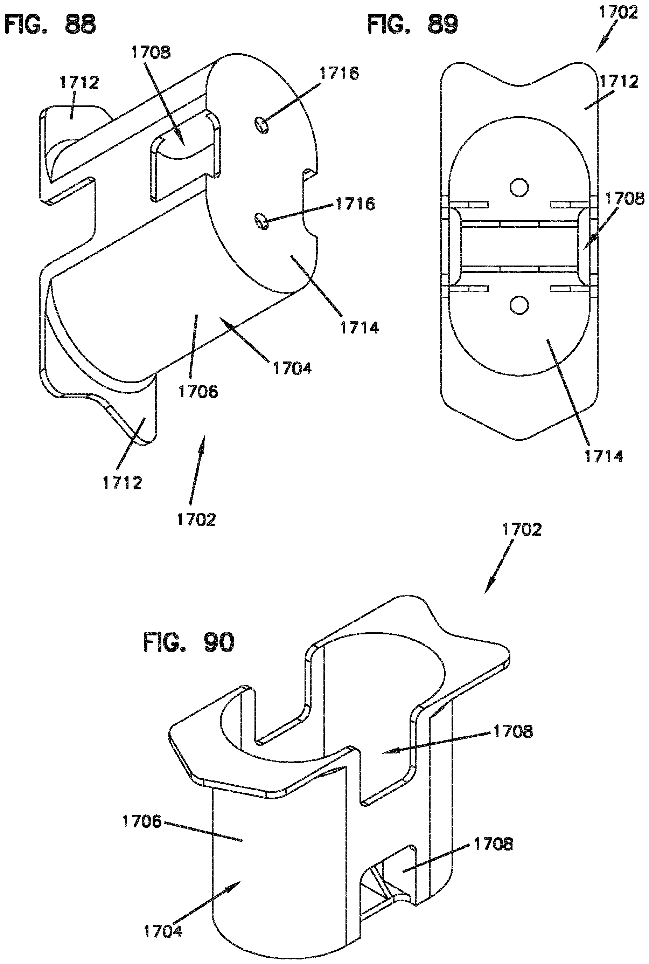

FIGS. 88-91 show the cable management device 1702. The cable management device 1702 includes a main body 1704 that has side walls 1706. The side walls 1706 include a plurality of passages 1708 for receiving cable securing devices 1710 (e.g., zip ties, straps, etc.). The cable securing devices 1710 can be used to bundle and secure cabling that is wrapped around the cable management device 1702. The cable management device 1702 also includes a top face 1712 at the top side of the main body 1704 and a bottom face 1714 at the bottom of the main body 1704. The bottom face 1714 includes at least one mounting feature 1716 for mounting the cable management device 1702 to a surface (e.g., the enclosure 20). In some examples, the at least one mounting feature is an aperture in the bottom face 1714 of the cable management device 1702 that is configured to receive a fastener.

In some examples, the main body 1704 is hollow and cylindrically shaped. In some examples, the main body 1704 can have an oval-shaped cross-section. In other examples, the top face 1712 is shaped so that it mates with other top faces 1712 of like cable management devices. In some examples, the top face 1712 includes a notch or a projection.

As shown in FIG, 91, the cable management device 1702 can also include a channel extension 1718 that extends from the main body 1704. The channel extension 1718 is configured to protect cabling that is partially or fully wrapped around the main body 1704 of the cable management device 1702. The channel extension 1718 includes at least one wall 1720 that forms a channel 1722 with the side walls 1706 of the main body 1704. In some examples, the channel extension 1718 can include a passageway 1724 at a top side 1726 to allow cabling to pass therethrough and to be positioned around the main body 1704 and within the channel 1722.

The cable management systems disclosed herein can be constructed of a variety of different materials. In some examples, metal can be used. In other examples, plastic or other similar material can be used. In other examples still, the cable management systems can use a mix of materials to construct different components of the systems.

The cable management systems disclosed herein can be in a of a variety of difference ways.

## Claims

1. A telecommunications enclosure (20) comprising:
a base (28) to which a cover (30) mounts to close an interior (31) of the enclosure (20); and
a cable management system (1100, 1200, 1300, 1400, 1500, 1600) disposed within the interior (31), the cable management system (1100, 1200, 1300, 1400, 1500, 1600) comprising:
at least one body section (1108, 1208, 1308, 1408, 1502, 1602), the body section having a base (1116, 1316) that defines a top face (1115) and a plurality of sides (1122, 1608), the top face (1115) including a cable management device mounting feature (1120, 1220, 1320, 1516) and the at least two sides including mating features (1130, 1230, 1510, 1610);
a pair of end sections (1110, 1210, 1310, 1410, 1502+1504, 1602) each having a base (1142), the bases (1142) each defining a top face (1144) and a plurality of sides (1143), wherein each top face (1144) includes a cable management device mounting feature (1120, 1220, 1320, 1516), and at least one side of the base (1142) includes a mating feature (1152, 1252, 1510, 1610) for mating with at least one side of the at least one body section (1108, 1208, 1308, 1502); and
at least one cable management device (1112, 1212, 1412, 1506, 1606) mountable to the cable management device mounting features (1120, 1220, 1320, 1516) of any of the top faces (1115, 1144) of the end sections (1110, 1210, 1310, 1410, 1502+1504) and the at least one body section (1108, 1208, 1308, 1408, 1502, 1602);
wherein:
the sections (1108, 1110) can be connected and secured with one another so that the sections are mated with one another; and
the at least one body section (1108, 1208, 1308, 1408, 1502, 1602) and the pair of end sections (1110, 1210, 1310, 1410, 1502+1504, 1602) form a storage area (1114) where cabling can be stored, the storage area being at least semi-enclosed by the at least one body section (1108, 1208, 1308, 1408, 1502, 1602) and the pair of end sections (1110, 1210, 1310, 1410, 1502+1504, 1602);
wherein the end sections (1110, 1210, 1310, 1410, 1502+1504, 1602) and the at least one body section (1108, 1208, 1308, 1408, 1502, 1602) each include walls (1121, 1150, 1221, 1250, 1321, 1350, 1504, 1604) positioned at the sides, the at least one body section (1108, 1208, 1308, 1408, 1502, 1602) including a pair of walls (1121, 1321, 1504, 1604), and
wherein the at least one cable management device (1112, 1212, 1412, 1506, 1606) has a cylindrical shape with a height that is substantially similar to a height of the walls (1121, 1150, 1221, 1250, 1321, 1350, 1504, 1604).

2. The telecommunications enclosure (20) of claim 1, wherein the walls (1121, 1150, 1221, 1250, 1321, 1350, 1504, 1604) of the end sections (1110, 1210, 1310, 1410, 1502+1504, 1602) and the at least one body section (1108, 1208, 1308, 1408, 1502, 1602) combine to surround the top faces of the end sections (1110, 1210, 1310, 1410, 1502+1504, 1602) and the at least one body section (1108, 1208, 1308, 1408, 1502, 1602) to form a peripheral wall.

3. The telecommunications enclosure (20) of claim 1, wherein the end sections (1110, 1210, 1310, 1410) each include curved walls (1150, 1250, 1350) surrounding at least portions of the bases of the end sections.

4. The telecommunications enclosure (20) of claim 1, wherein the at least one body section (1108, 1208, 1308, 1408, 1502, 1602) is a first body section, the cable management system further comprising a second body section (1108, 1208, 1308, 1408, 1502, 1602), the second body section being identical to the first body section, and wherein the second body section is mated with the first body section and at least one end section (1110, 1210, 1310, 1410, 1502+1504, 1602).

5. The telecommunications enclosure (20) of claim 1, further comprising a plurality of body sections (1108, 1208, 1308, 1408, 1502, 1602) each including at least two sides that include mating features (1120, 1220, 1320, 1516), wherein the mating features (1120, 1220, 1320, 1516) are for mating with the mating features (1120, 1220, 1320, 1516) of other body sections (1108, 1208, 1308, 1408, 1502, 1602) and the end sections (1110, 1210, 1310, 1410, 1502+1504, 1602).

6. The telecommunications enclosure (20) of claim 1, wherein the at least one cable management device (1112, 1212, 1412, 1506, 1606) includes a bend radius limiter.

7. The telecommunications enclosure (20) of claim 1, wherein a first end of the at least one cable management device (1112, 1212, 1412, 1506, 1606) is for mounting to the cable management device mounting features (1120, 1220, 1320, 1516) of any of the top faces of the end sections (1110, 1210, 1310, 1410, 1502+1504, 1602) and the at least one body section (1108, 1208, 1308, 1408, 1502, 1602), and wherein the at least one cable management device (1112, 1212, 1412, 1506, 1606) includes at least one tab (1163, 1263, 1363, 1524, 1620) extending away from the cable management device (1112, 1212, 1412, 1506, 1606) at an opposite second end.

8. The telecommunications enclosure (20) of claim 1, wherein the cable management system (1400) also includes one or more trough sections (1480, 1490) having mating features allowing the trough sections (1480, 1490) to be mated with the at least one body section (1108, 1208, 1308, 1408, 1502, 1602) or the end section (1110, 1210, 1310, 1410, 1502+1504, 1602).

9. The telecommunications enclosure (20) of claim 1, wherein the walls (1150, 1250, 1504) define passages (1158, 1258, 1520) configured either to allow cabling to pass therethrough.

10. The telecommunications enclosure (20) of claim 1, wherein the walls (1250, 1321) define slots (1253) or include cable securing device tabs (1323) configured to receive a cable securing device.

11. The telecommunications enclosure (20) of claim 1, wherein the walls (1604) are configured to be extendable so that a storage area (1601) can be altered as needed.

12. The telecommunications enclosure (20) of claim 1, wherein the enclosure (20) is a compact, wall mountable fiber enclosure for indoor and outdoor use.

13. The telecommunications enclosure (20) of claim 1, wherein one or more cable port regions (32) enable cables to enter/exit the enclosure (20).

14. The telecommunications enclosure (20) of claim 13, wherein a gasket or other sealing member can be disposed between the base (28) and cover (30) to environmentally seal the interior (31) of the enclosure (20) when the cover (30) is closed, and wherein the cable port regions (32) also seal around the incoming/outgoing cables to environmentally seal the enclosure interior (31).

## Patentansprüche

1. Telekommunikationsgehäuse (20), umfassend:
eine Basis (28), an der eine Abdeckung (30) angebracht ist, um einen Innenraum (31) des Gehäuses (20) zu schließen; und
ein Kabelverwaltungssystem (1100, 1200, 1300, 1400, 1500, 1600), das in dem Innenraum (31) angeordnet ist, wobei das Kabelverwaltungssystem (1100, 1200, 1300, 1400, 1500, 1600) umfasst:
mindestens einen Körperabschnitt (1108, 1208, 1308, 1408, 1502, 1602), wobei der Körperabschnitt eine Basis (1116, 1316) aufweist, die eine obere Fläche (1115) und mehrere Seiten (1122, 1608) definiert und die obere Fläche (1115) ein Kabelverwaltungsvorrichtungsbefestigungselement (1120, 1220, 1320, 1516) umfasst und die mindestens zwei Seiten Paarungselemente (1130, 1230, 1510, 1610) umfassen;
ein Paar von Endabschnitten (1110, 1210, 1310, 1410, 1502+1504, 1602), die jeweils eine Basis (1142) aufweisen, wobei die Basen (1142) jeweils eine obere Fläche (1144) und mehrere Seiten (1143) definieren, wobei jede obere Fläche (1144) ein Kabelverwaltungsvorrichtungsbefestigungselement (1120, 1220, 1320, 1516) umfasst und mindestens eine Seite der Basis (1142) ein Paarungselement (1152, 1252, 1510, 1610) zum Paaren mit mindestens einer Seite des mindestens einen Körperabschnitts (1108, 1208, 1308, 1502) umfasst; und
mindestens eine Kabelverwaltungsvorrichtung (1112, 1212, 1412, 1506, 1606), die an den Kabelverwaltungsvorrichtungsbefestigungselementen (1120, 1220, 1320, 1516) von irgendeiner der oberen Flächen (1115, 1144) der Endabschnitte (1110, 1210, 1310, 1410, 1502+1504) und dem mindestens einen Körperabschnitt (1108, 1208, 1308, 1408, 1502, 1602) anbringbar ist;
wobei:
die Abschnitte (1108, 1110) miteinander verbunden und befestigt sein können, sodass die Abschnitte miteinander gepaart sind; und
der mindestens eine Körperabschnitt (1108, 1208, 1308, 1408, 1502, 1602) und das Paar von Endabschnitten (1110, 1210, 1310, 1410, 1502+1504, 1602) einen Speicherbereich (1114) bilden, in dem Kabel gespeichert werden können, und der Speicherbereich durch den mindestens einen Körperabschnitt (1108, 1208, 1308, 1408, 1502, 1602) und das Paar von Endabschnitten (1110, 1210, 1310, 1410, 1502+1504, 1602) mindestens halb umschlossen ist;
wobei die Endabschnitte (1110, 1210, 1310, 1410, 1502+1504, 1602) und der mindestens eine Körperabschnitt (1108, 1208, 1308, 1408, 1502, 1602) jeweils Wände (1121, 1150, 1221, 1250, 1321, 1350, 1504, 1604) umfassen, die an den Seiten positioniert sind, und der mindestens eine Körperabschnitt (1108, 1208, 1308, 1408, 1502, 1602) ein Paar von Wänden (1121, 1321, 1504, 1604) umfasst, und
wobei die mindestens eine Kabelverwaltungsvorrichtung (1112, 1212, 1412, 1506, 1606) eine zylindrische Form mit einer Höhe aufweist, die einer Höhe der Wände (1121, 1150, 1221, 1250, 1321, 1350, 1504, 1604) im Wesentlichen ähnlich ist.

2. Telekommunikationsgehäuse (20) nach Anspruch 1, wobei sich die Wände (1121, 1150, 1221, 1250, 1321, 1350, 1504, 1604) der Endabschnitte (1110, 1210, 1310, 1410, 1502+1504, 1602) und der mindestens eine Körperabschnitt (1108, 1208, 1308, 1408, 1502, 1602) kombinieren, um die oberen Flächen der Endabschnitte (1110, 1210, 1310, 1410, 1502+1504, 1602) und des mindestens einen Körperabschnitts (1108, 1208, 1308, 1408, 1502, 1602) zu umgeben, um eine Umfangswand zu bilden.

3. Telekommunikationsgehäuse (20) nach Anspruch 1, wobei die Endabschnitte (1110, 1210, 1310, 1410) jeweils kurvenförmige Wände (1150, 1250, 1350) umfassen, die mindestens Abschnitte der Basen der Endabschnitte umgeben.

4. Telekommunikationsgehäuse (20) nach Anspruch 1, wobei der mindestens eine Körperabschnitt (1108, 1208, 1308, 1408, 1502, 1602) ein erster Körperabschnitt ist, das Kabelverwaltungssystem ferner einen zweiten Körperabschnitt (1108, 1208, 1308, 1408, 1502, 1602) umfasst, der zweite Körperabschnitt mit dem ersten Körperabschnitt identisch ist, und wobei der zweite Körperabschnitt mit dem ersten Körperabschnitt und mindestens einem Endabschnitt (1110, 1210, 1310, 1410, 1502+1504, 1602) gepaart ist.

5. Telekommunikationsgehäuse (20) nach Anspruch 1, ferner umfassend mehrere Körperabschnitte (1108, 1208, 1308, 1408, 1502, 1602), die jeweils mindestens zwei Seiten umfassen, die Paarungselemente (1120, 1220, 1320, 1516) umfassen, wobei die Paarungselemente (1120, 1220, 1320, 1516) zum Paaren mit den Paarungselementen (1120, 1220, 1320, 1516) von anderen Körperabschnitten (1108, 1208, 1308, 1408, 1502, 1602) und den Endabschnitten (1110, 1210, 1310, 1410, 1502+1504, 1602) dienen.

6. Telekommunikationsgehäuse (20) nach Anspruch 1, wobei die mindestens eine Kabelverwaltungsvorrichtung (1112, 1212, 1412, 1506, 1606) einen Biegeradiusbegrenzer umfasst.

7. Telekommunikationsgehäuse (20) nach Anspruch 1, wobei ein erstes Ende der mindestens einen Kabelverwaltungsvorrichtung (1112, 1212, 1412, 1506, 1606) zum Anbringen an den Kabelverwaltungsvorrichtungsbefestigungselementen (1120, 1220, 1320, 1516) von einer der oberen Flächen der Endabschnitte (1110, 1210, 1310, 1410, 1502+1504, 1602) und des mindestens einen Körperabschnitts (1108, 1208, 1308, 1408, 1502, 1602) dient, und wobei die mindestens eine Kabelverwaltungsvorrichtung (1112, 1212, 1412, 1506, 1606) mindestens eine Lasche (1163, 1263, 1363, 1524, 1620) umfasst, die sich an einem entgegengesetzten zweiten Ende von der Kabelverwaltungsvorrichtung (1112, 1212, 1412, 1506, 1606) weg erstreckt.

8. Telekommunikationsgehäuse (20) nach Anspruch 1, wobei das Kabelverwaltungssystem (1400) auch einen oder mehrere Wannenabschnitte (1480, 1490) mit Paarungselementen umfasst, die es ermöglichen, dass die Wannenabschnitte (1480, 1490) mit dem mindestens einen Körperabschnitt (1108, 1208, 1308, 1408, 1502, 1602) oder dem Endabschnitt (1110, 1210, 1310, 1410, 1502+1504, 1602) gepaart werden.

9. Telekommunikationsgehäuse (20) nach Anspruch 1, wobei die Wände (1150, 1250, 1504) Durchgänge (1158, 1258, 1520) definieren, die konfiguriert sind, sodass Kabel durch sie hindurchgeführt werden können.

10. Telekommunikationsgehäuse (20) nach Anspruch 1, wobei die Wände (1250, 1321) Schlitze (1253) definieren oder Kabelbefestigungsvorrichtungslaschen (1323) umfassen, die konfiguriert sind, eine Kabelbefestigungsvorrichtung aufzunehmen.

11. Telekommunikationsgehäuse (20) nach Anspruch 1, wobei die Wände (1604) derart konfiguriert sind, dass sie erweiterbar sind, sodass ein Speicherbereich (1601) bei Bedarf verändert werden kann.

12. Telekommunikationsgehäuse (20) nach Anspruch 1, wobei das Gehäuse (20) ein kompaktes an einer Wand anbringbares Fasergehäuse zur Verwendung im Innen- und Außenbereich ist.

13. Telekommunikationsgehäuse (20) nach Anspruch 1, wobei ein oder mehrere Kabelanschlussregionen (32) ermöglichen, dass Kabel in das Gehäuse (20) eintreten/daraus austreten.

14. Telekommunikationsgehäuse (20) nach Anspruch 13, wobei eine Dichtung oder ein anderes Dichtungselement zwischen der Basis (28) und der Abdeckung (30) angeordnet sein kann, um den Innenraum (31) des Gehäuses (20) gegenüber der Umgebung abzudichten, wenn die Abdeckung (30) geschlossen ist, und wobei die Kabelanschlussregionen (32) auch um die eingehenden/abgehenden Kabel herum abdichten, um den Gehäuseinnenraum (31) gegenüber der Umgebung abzudichten.

## Revendications

1. Boîtier de télécommunications (20) comprenant :
une base (28) sur laquelle un couvercle (30) est monté pour fermer un intérieur (31) du boîtier (20) ; et
un système de gestion de câbles (1100, 1200, 1300, 1400, 1500, 1600) disposé à l'intérieur (31), le système de gestion de câbles (1100, 1200, 1300, 1400, 1500, 1600) comprenant :
au moins une section de corps (1108, 1208, 1308, 1408, 1502, 1602), la section de corps ayant une base (1116, 1316) qui définit une face supérieure (1115) et une pluralité de côtés (1122, 1608), la face supérieure (1115) comprenant une élément de montage de dispositif de gestion de câble (1120, 1220, 1320, 1516) et les au moins deux côtés comprenant des éléments d'accouplement (1130, 1230, 1510, 1610) ;
une paire de sections d'extrémité (1110, 1210, 1310, 1410, 1502+1504, 1602) ayant chacune une base (1142), les bases (1142) définissant chacune une face supérieure (1144) et une pluralité de côtés (1143), dans lequel chaque face supérieure (1144) comprend un élément de montage de dispositif de gestion de câble (1120, 1220, 1320, 1516), et au moins un côté de la base (1142) comprend un élément d'accouplement (1152, 1252, 1510, 1610) pour l'accouplement avec au moins un côté de l'au moins une section de corps (1108, 1208, 1308, 1502) ; et
au moins un dispositif de gestion de câbles (1112, 1212, 1412, 1506, 1606) pouvant être monté sur les éléments de montage de dispositif de gestion de câbles (1120, 1220, 1320, 1516) d'une quelconque parmi les faces supérieures (1115, 1144) des sections d'extrémité (1110, 1210, 1310, 1410, 1502+1504) et de l'au moins une section de corps (1108, 1208, 1308, 1408, 1502, 1602) ;
dans lequel :
les sections (1108, 1110) peuvent être reliées et fixées les unes aux autres de sorte que les sections soient accouplées les unes aux autres ; et
l'au moins une section de corps (1108, 1208, 1308, 1408, 1502, 1602) et la paire de sections d'extrémité (1110, 1210, 1310, 1410, 1502+1504, 1602) forment une zone de stockage (1114) où un câblage peut être stocké, la zone de stockage étant au moins semi-fermée par l'au moins une section de corps (1108, 1208, 1308, 1408, 1502, 1602) et la paire de sections d'extrémité (1110, 1210, 1310, 1410, 1502+1504, 1602) ;
dans lequel les sections d'extrémité (1110, 1210, 1310, 1410, 1502+1504, 1602) et l'au moins une section de corps (1108, 1208, 1308, 1408, 1502, 1602) comprennent chacune des parois (1121, 1150, 1221, 1250, 1321, 1350, 1504, 1604) positionnées sur les côtés, l'au moins une section de corps (1108, 1208, 1308, 1408, 1502, 1602) comprenant une paire de parois (1121, 1321, 1504, 1604), et
dans lequel l'au moins un dispositif de gestion de câble (1112, 1212, 1412, 1506, 1606) a une forme cylindrique avec une hauteur qui est sensiblement similaire à une hauteur des parois (1121, 1150, 1221, 1250, 1321, 1350, 1504, 1604).

2. Boîtier de télécommunication (20) selon la revendication 1, dans lequel les parois (1121, 1150, 1221, 1250, 1321, 1350, 1504, 1604) des sections d'extrémité (1110, 1210, 1310, 1410, 1502+1504, 1602) et l'au moins une section de corps (1108, 1208, 1308, 1408, 1502, 1602) se combinent pour entourer les faces supérieures des sections d'extrémités (1110, 1210, 1310, 1410, 1502+1504, 1602) et l'au moins une section de corps (1108, 1208, 1308, 1408, 1502, 1602) pour former une paroi périphérique.

3. Boîtier de télécommunications (20) selon la revendication 1, dans lequel les sections d'extrémité (1110, 1210, 1310, 1410) comprennent chacune des parois incurvées (1150, 1250, 1350) entourant au moins des parties des bases des sections d'extrémité.

4. Boîtier de télécommunications (20) selon la revendication 1, dans lequel l'au moins une section de corps (1108, 1208, 1308, 1408, 1502, 1602) est une première section de corps, le système de gestion de câbles comprenant en outre une deuxième section de corps (1108, 1208, 1308, 1408, 1502, 1602), la deuxième section de corps étant identique à la première section de corps, et dans lequel la deuxième section de corps est accouplée avec la première section de corps et au moins une section d'extrémité (1110, 1210, 1310, 1410, 1502+1504, 1602).

5. Boîtier de télécommunications (20) selon la revendication 1, comprenant en outre une pluralité de sections de corps (1108, 1208, 1308, 1408, 1502, 1602) comprenant chacune au moins deux côtés qui comprennent des éléments d'accouplement (1120, 1220, 1320, 1516), dans lequel les éléments d'accouplement (1120, 1220, 1320, 1516) sont pour l'accouplement avec les éléments d'accouplement (1120, 1220, 1320, 1516) d'autres sections de corps (1108, 1208, 1308, 1408, 1502, 1602) et des sections d'extrémité (1110, 1210, 1310, 1410, 1502+1504, 1602).

6. Boîtier de télécommunications (20) selon la revendication 1, dans lequel l'au moins un dispositif de gestion de câbles (1112, 1212, 1412, 1506, 1606) comprend un limiteur de rayon de courbure.

7. Boîtier de télécommunications (20) selon la revendication 1, dans lequel une première extrémité de l'au moins un dispositif de gestion de câble (1112, 1212, 1412, 1506, 1606) est pour le montage sur les éléments de montage de dispositif de gestion de câble (1120, 1220, 1320, 1516) de l'une quelconque des faces supérieures des sections d'extrémité (1110, 1210, 1310, 1410, 1502+1504, 1602) et l'au moins une section de corps (1108, 1208, 1308, 1408, 1502, 1602), et dans lequel l'au moins un dispositif de gestion de câble (1112, 1212, 1412, 1506, 1606) comprend au moins une languette (1163, 1263, 1363, 1524, 1620) s'étendant à l'écart du dispositif de gestion de câble (1112, 1212, 1412, 1506, 1606) à une deuxième extrémité opposée.

8. Boîtier de télécommunication (20) selon la revendication 1, dans lequel le système de gestion de câbles (1400) comprend également une ou plusieurs sections en creux (1480, 1490) ayant des éléments d'accouplement permettant aux sections en creux (1480, 1490) d'être accouplées avec l'au moins une section de corps (1108, 1208, 1308, 1408, 1502, 1602) ou à la section d'extrémité (1110, 1210, 1310, 1410, 1502+1504, 1602).

9. Boîtier de télécommunications (20) selon la revendication 1, dans lequel les parois (1150, 1250, 1504) définissent des passages (1158, 1258, 1520) configurés chacun pour permettre au câblage de passer à travers.

10. Boîtier de télécommunications (20) selon la revendication 1, dans lequel les parois (1250, 1321) définissent des fentes (1253) ou comprennent des languettes de dispositif de fixation de câble (1323) configurées pour recevoir un dispositif de fixation de câble.

11. Boîtier de télécommunications (20) selon la revendication 1, dans lequel les parois (1604) sont configurées pour être extensibles de sorte qu'une zone de stockage (1601) peut être modifiée selon les besoins.

12. Boîtier de télécommunications (20) selon la revendication 1, dans lequel le boîtier (20) est un boîtier en fibres compact, pouvant être monté sur une paroi, pour une utilisation intérieure et extérieure.

13. Boîtier de télécommunications (20) selon la revendication 1, dans lequel une ou plusieurs régions d'orifice de câble (32) permettent aux câbles d'entrer/sortir du boîtier (20).

14. Boîtier de télécommunications (20) selon la revendication 13, dans lequel un joint ou un autre élément d'étanchéité peut être disposé entre la base (28) et le couvercle (30) pour rendre étanche à l'environnement l'intérieur (31) du boîtier (20) lorsque le couvercle (30) est fermé, et dans lequel les régions d'orifice de câble (32) assurent également l'étanchéité autour des câbles d'entrer/sortir pour rendre étanche à l'environnement l'intérieur (31) du boîtier.
